# EUROPÄISCHE PATENTSCHRIFT

(11) **EP 4 241 151 B1**
(45) Veröffentlichungstag und Bekanntmachung des Hinweises auf die Patenterteilung: **21.05.2025**
(21) Anmeldenummer: 21814688.4
(22) Anmeldetag: 05.11.2021
(51) Int. Cl.: G05D 1/00

(54) **METHODE ZUR EFFIZIENTEN ROUTENPLANUNG VON FAHRZEUGEN IN EINEM SORTIERSYSTEM**
METHOD FOR EFFICIENT ROUTE PLANNING OF VEHICLES IN A SORTING SYSTEM
PROCEDE DE PLANIFICATION EFFICACE D'ITINÉRAIRES DE VÉHICULES DANS UN SYSTÈME DE COORDINATION

(30) Priorität: 08.11.2020 DE 102020214005
(43) Veröffentlichungstag der Anmeldung: 13.09.2023
(73) Patentinhaber: Fraunhofer-Gesellschaft zur Förderung der angewandten Forschung e.V., 80686 München (DE)
(72) Erfinder: ROIDL, Moritz, 44227 Dortmund (DE); EMMERICH, Jan Sören, 44227 Dortmund (DE); BENKENSTEIN, Leonie, 44227 Dortmund (DE); KLOKOWSKI, Patrick, 44227 Dortmund (DE); HAMMERMEISTER, Christian, 44227 Dortmund (DE)
(74) Vertreter: König, Andreas Rudolf
(86) Internationale Anmeldenummer: PCT/EP2021/080790
(87) Internationale Veröffentlichungsnummer: WO 2022/096655

(56) Entgegenhaltungen:
- EP-A1- 3 712 872
- DE-A1- 102012 021 282
- US-A1- 2011 093 134
- US-A1- 2020 293 063

## Beschreibung

Die vorliegende Erfindung bezieht sich auf ein Sortiersystem, auf eine Sortiersystemsteuerungseinrichtung und auf Verfahren zum Betreiben derselben. Die vorliegende Erfindung bezieht sich insbesondere auf eine Methode zur effizienten Routenplanung von Fahrzeugen im Sortiersystem.

In Sortiersystemen, wie zum Beispiel in US2020/293063 A1, , die auf Fahrzeugen basieren, muss die Transportleistung durch eine große Anzahl von Fahrzeugen erbracht werden, die auf engem Raum mit hoher Geschwindigkeit und Beschleunigung fahren, damit eine ausreichende Gesamtleistung des Systems entsteht. Jedes einzelne Fahrzeug nimmt ein Transportgut bei langsamer Fahrt an einer Quelle auf, es fährt auf einer vorberechneten Bahnkurve mit hohem Beschleunigungsverhalten und Bremsverhalten nah an der Maximalgeschwindigkeit zur Senke und gibt dort das Gut bei langsamer Fahrt ab.

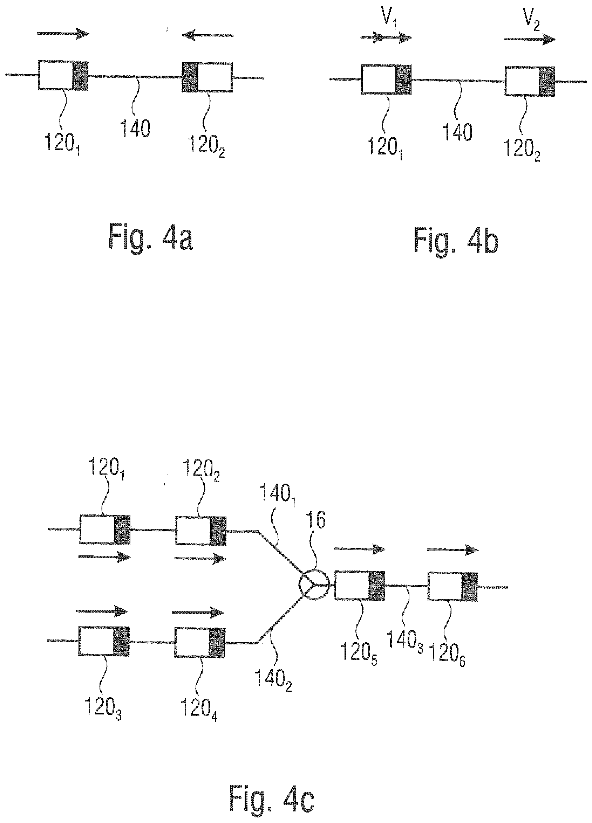

In einem Sortiersystem können dabei mehrere unterschiedliche Arten von Behinderungen erfolgen, insbesondere in Multi-Robotersystemen, die in den Fig. 4a bis 4f dargestellt sind. Fig. 4a zeigt dabei ein beispielhaftes Szenario, in welchem sich zwei Fahrzeuge 120₁ und 120₂ entlang einer Trajektorie 140 aufeinander zu bewegen, etwa entlang entgegengesetzter Fahrtrichtungen, was zu einer sogenannten Kopf-zu-Kopfkollision führen kann.

Fig. 4b zeigt ein Szenario, bei dem die Fahrzeuge 120₁ und 120₂ zwar entlang einer gleichen Richtung auf derselben Trajektorie 140 unterwegs sind, ein hinter dem Fahrzeug 120₂ fahrendes Fahrzeug 120₁ jedoch mit einer Geschwindigkeit V₁ fährt, die größer ist als die Geschwindigkeit V₂, so dass es bei einem Einholen des Fahrzeugs 120₂ zu einer sogenannten Kopf-zu-Hinterteilkollision (engl.: Head to Tail) kommen kann. Die Fig. 4a und 4b zeigen insofern mögliche Szenarien für Kollisionen.

Fig. 4c zeigt ein Szenario, bei dem Fahrzeuge 120₁ und 120₂ beziehungsweise 120₃ und 120₄, die auf unterschiedlichen Trajektorien 140₁ und 140₂ unterwegs sind, sich die Trajektorien jedoch an einem Treffpunkt 160 miteinander zu einer Trajektorie 140_{g} verbinden, so dass es zu einem Stau beim Einsortieren kommen kann, etwa, da der Treffpunkt 160 nur von einem Fahrzeug gleichzeitig befahren werden kann, aber aus den Trajektorien 140₁ und 140₂ eine höhere Anzahl ankommt. Dies kann zu Schlangenbildung (engl.: queues) führen.

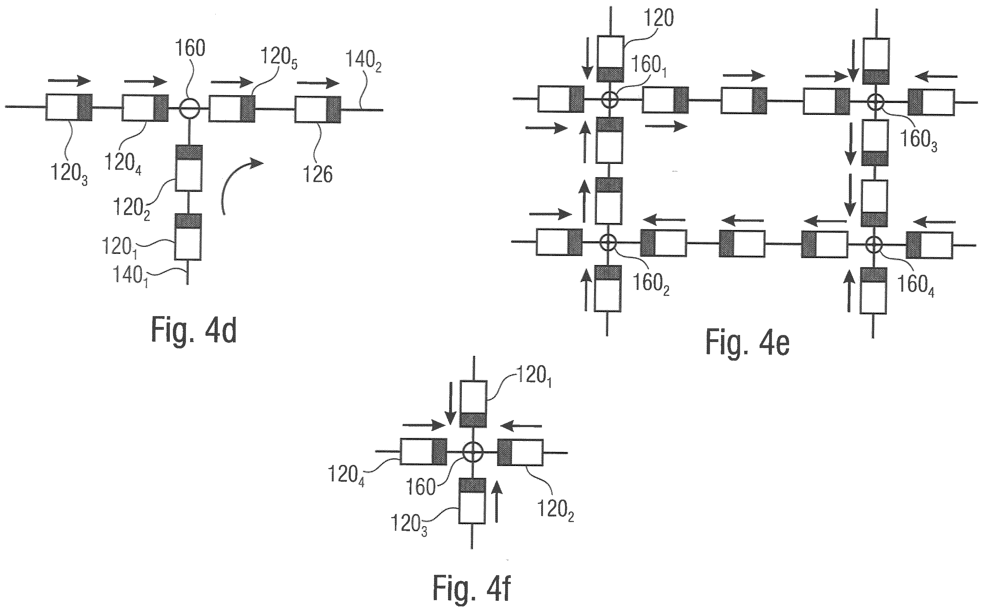

Fig. 4d zeigt ein Szenario, bei dem sich Fahrzeuge 120₁ und 120₂ auf der Trajektorie 140₁ auf die Trajektorie 140₂ einsortieren sollen, auf der bereits Fahrzeuge 120₃ bis 120₆ unterwegs sind, so dass für die Einsortierung ungenügend Platz vorhanden ist. Basierend auf Vorfahrtsregeln kann es dazu kommen, dass die Fahrzeuge auf der Trajektorie 14₁ warten müssen, bis ein Fahrzeugstrom aus der Trajektorie 140₂ vor dem Treffpunkt 160 genügend Abstand aufweist oder zum Erliegen kommt. Fig. 4b zeigt somit einen teilweisen oder lokalen Fahrzeugstillstand, einen sogenannten Livelock.

Die Fig. 4e und 4f zeigen demgegenüber einen nicht-lokalen Totalstillstand (engl.: deadlock) in Fig. 4e beziehungsweise einen lokalen Totalstillstand in Fig. 4f.

Jedes dieser Szenarien erfordert eine Auflösung des Problems beziehungsweise eine Vermeidung des Szenarios, um einen reibungslosen Betrieb aufrechtzuerhalten.

In klassischen Sortiersystemen mit Förderband oder Kippschalen werden die Güter mit hoher Geschwindigkeit auf dem Förderband beziehungsweise den Kippschalen transportiert. Das Herunterfallen in Kurven wird durch entsprechende Leitplanken verhindert. An technisch aufwendigen Einschleusungen wird das Transportgut auf die Hauptgeschwindigkeit des Sortierkreislaufs beschleunigt und auf eine freie Stelle beziehungsweise Schale gebracht. Das Ausschleusen an der Senke geschieht durch einfaches Abstreichen beziehungsweise Kippen der Schale. Durch den festen Kreislauf und die gezielte Ein- und Ausschleusung gibt es keine Behinderungen der Transportgüter untereinander.

In existierenden Sortiersystemen mit autonomen Fahrzeugen und freier Verfahrbarkeit wird mit niedrigen Geschwindigkeiten von beispielsweise maximal drei Meter pro Sekunde und großen Sicherheitsabständen gearbeitet. Alternativ fahren die Fahrzeuge auf festgelegten Strecken mit blockbasierten Reservierungen oder auf einem schachbrettmusterartigen Gitter (engl.: grid), welches die algorithmische Komplexität der Koordination vieler Fahrzeuge deutlich erleichtert. Hier basieren fast alle der bestehenden Algorithmen auf Modifikationen des A*-Algorithmus, welche die gleichzeitige Optimierung der Wege für mehrere Fahrzeuge ermöglichen. Diese Problemstellung wird auch unter dem Namen "Multi-Agent-Pathfindung", das heißt, Wegfindung für mehrere Teilnehmer, bezeichnet.

Es besteht somit ein Bedarf an flexiblen Sortiersystemen, bei denen Güter mit hohen Geschwindigkeiten transportiert werden können.

Eine Aufgabe der vorliegenden Erfindung besteht deshalb darin, ein Sortiersystem, eine Sortiersystemsteuerungseinrichtung, Verfahren zum Betreiben derselben sowie Computerprogrammprodukte zur Implementierung derartiger Verfahren zu schaffen, die eine Bewegung von Gütern in einem Sortiersystem mit hohen Geschwindigkeiten auf flexiblen Routen ermöglicht.

Diese Aufgabe wird durch den Gegenstand der unabhängigen Patentansprüche gelöst.

Eine Kernidee der vorliegenden Erfindung besteht darin, erkannt zu haben, dass eine Vorabbestimmung von Trajektorien zwischen Startpunkten und Endpunkten mit einem jeweils zugeordneten Geschwindigkeitsprofil beziehungsweise einer Geschwindigkeitsvorgabe nachträglich bei Bedarf geändert werden kann, um mögliche Kollisionen zwischen mehreren Trajektorien zu vermeiden, um den Fahrtauftrag anzupassen. Dadurch ist es möglich, die unterschiedlichen Trajektorien zu nutzen, um eine hohe Flexibilität in dem Sortiersystem zu erhalten und ferner auch hohe Geschwindigkeiten zu implementieren, da der Berechnungsaufwand für die Anpassung der Fahrtaufträge gering ist und beispielsweise auf noch nicht fahrende Fahrzeuge begrenzt werden kann, so dass die in Fahrt befindlichen Fahrzeuge mit hoher Geschwindigkeit fahren können.

Gemäß einem Ausführungsbeispiel umfasst ein Sortiersystem eine Mehrzahl von Fahrzeugen, die ausgebildet sind, um sich in dem Sortiersystem entlang von Trajektorien zu bewegen. Das Sortiersystem umfasst eine Berechnungseinrichtung, die ausgebildet ist, um zwischen einer ersten Anzahl von Startpunkten und einer zweiten Anzahl von Endpunkten eine dritte Anzahl von Trajektorien zu bestimmen, wobei jede Trajektorie eine Geschwindigkeitsvorgabe für ein Fahrzeug entlang der Trajektorie zugeordnet ist. Das Sortiersystem umfasst eine Koordinierungseinrichtung, die ausgebildet ist, um Fahrtaufträge an die Mehrzahl von Fahrzeugen zu übermitteln, wobei jeder Fahrtauftrag eine Fahrt von einem der Startpunkte zu einem der Endpunkte entlang einer der Trajektorien umfasst. Das Sortiersystem umfasst eine Kollisionsvermeidungseinrichtung, die ausgebildet ist, um für einen neuen Fahrtauftrag eine Trajektorie auf mögliche Kollisionen mit einem weiteren Fahrzeug des Sortiersystems zu untersuchen, um eine Kollisionsinformation zu erhalten, die eine mögliche Kollision anzeigt, so dass die Kollisionsvermeidungseinrichtung die der Trajektorie zugeordnete Geschwindigkeitsvorgabe basierend auf der Kollisionsinformation verändert, um eine veränderte Geschwindigkeitsvorgabe zu erhalten, und um die mögliche Kollision zu vermeiden. Das Sortiersystem ist ausgebildet, um den neuen Fahrtauftrag umfassend eine Instruktion, die die Trajektorie und die veränderte Geschwindigkeitsvorgabe umfasst, an das Fahrzeug bzw. die Fahrzeugsteuerung zu übermitteln.

Gemäß einem Ausführungsbeispiel ist die Berechnungseinrichtung ausgebildet, um zwischen einem Startpunkt der ersten Anzahl von Startpunkten und einem Endpunkt der zweiten Anzahl von Endpunkten eine Mehrzahl von Trajektorienkandidaten zu bestimmen und die Koordinierungseinrichtung ist ausgebildet, um einen der Trajektorienkandidaten als Trajektorie für den neuen Fahrtauftrag auszuwählen. Dies ermöglicht eine hohe Flexibilität, da mehrere mögliche Wege berücksichtigt werden.

Gemäß einem Ausführungsbeispiel ist die Berechnungseinrichtung ausgebildet, um die Mehrzahl von Trajektorienkandidaten unter Berücksichtigung einer Trajektorienkrümmung zu bestimmen. Die Berechnungseinrichtung ist ausgebildet, um eine vordefinierte Anzahl von Trajektorienkandidaten minimaler Krümmung und/oder eine Anzahl von Trajektorienkandidaten zu bestimmen, die Trajektorienkrümmungen von höchstens einem vordefinierten Krümmungsschwellwert aufweisen. Dies ermöglicht es, den Berechnungsaufwand in vorbestimmten Grenzen zu halten.

Gemäß einem Ausführungsbeispiel ist die Berechnungseinrichtung ausgebildet, um die Trajektorie basierend auf Splines zu berechnen. Dies ermöglicht eine hohe Effizienz der Berechnung.

Gemäß einem Ausführungsbeispiel ist die Berechnungseinrichtung ausgebildet, um für Kontrollpunkte zwischen dem Startpunkt und dem Endpunkt der Trajektorie einen Abstand zu bestimmen, der eine Entfernung benachbarter Trajektorienkandidaten anzeigt. Hierdurch kann eine Berechnung später nicht zu realisierender Trajektorien vermieden werden beziehungsweise es können zusätzliche Sicherheitsaspekte berücksichtigt werden.

Gemäß einem Ausführungsbeispiel ist die Berechnungseinrichtung ausgebildet, um die Geschwindigkeitsvorgabe kinodynamisch als zeitoptimierte Geschwindigkeitsvorgabe zu berechnen. Dies ermöglicht es einerseits, hohe bis maximale Geschwindigkeiten des Fahrzeugs auszunutzen und gleichzeitig die Geschwindigkeitsvorgabenanpassung auf eine Reduzierung der hohen Geschwindigkeit zu begrenzen, weil es einen geringen Berechnungsaufwand ermöglicht.

Gemäß einem Ausführungsbeispiel ist die Trajektorie so ausgestaltet, dass sie eine Anzahl von Trajektorienabschnitten umfasst. Die Berechnungseinrichtung ist ausgebildet, um für jeden Trajektorienabschnitt eine Abschnittsgeschwindigkeitsvorgabe zu berechnen, und um die Geschwindigkeitsvorgabe basierend auf einer Kombination der Abschnittsgeschwindigkeitsvorgaben zu berechnen. Dies ermöglicht ein zeitvariantes Geschwindigkeitsprofil.

Gemäß einem Ausführungsbeispiel ist die Berechnungseinrichtung ausgebildet, um für jeden Trajektorienabschnitt basierend auf einer Krümmung des Trajektorienabschnitts und basierend auf einer maximalen Beschleunigung eines Fahrzeugs eine Maximalgeschwindigkeit zu berechnen, die möglicherweise dem jeweiligen Fahrzeugtyp zugeordnet ist. Basierend auf der Maximalgeschwindigkeit, einer Geschwindigkeitsvorgabe zum Beginn des Trajektorienabschnitts und einer Geschwindigkeitsvorgabe an einem Ende des Trajektorienabschnitts kann die Abschnittsgeschwindigkeitsvorgabe durch die Berechnungseinrichtung berechnet werden. Dies ermöglicht eine gute Ausnutzung möglicher maximaler Beschleunigungen zum Erhalt einer möglichst hohen, gar maximalen Geschwindigkeit auf dem Abschnitt.

Gemäß einem Ausführungsbeispiel ist die Koordinierungseinrichtung ausgebildet, um für den neuen Fahrtauftrag die Trajektorie aus einer Mehrzahl von Trajektorienkandidaten auszuwählen. Die Mehrzahl von Trajektorienkandidaten berücksichtigt dabei bereits an Fahrzeuge zugewiesene Trajektorien in bestehenden Fahraufträgen. Dies ermöglicht eine effiziente Vermeidung von Blockierungen, indem eine Überlastung von Trajektorien vermieden wird, wobei beispielsweise Fahrzeuge berücksichtigt werden, die bereits unterwegs sind oder bald starten.

Gemäß einem Ausführungsbeispiel ist die Kollisionsvermeidungseinrichtung ausgebildet, um die Geschwindigkeitsvorgabe für bereits zugewiesene Trajektorien bestehender Fahrtaufträge nicht anzupassen. Dies ermöglicht eine erhebliche Reduzierung möglicher Berechnungen, so dass schnell Ergebnisse erhalten werden können.

Gemäß einem Ausführungsbeispiel ist die Koordinierungseinrichtung ausgebildet, um Fahrzeuge auf bereits zugewiesenen Trajektorien für die Auswahl der Trajektorie als potenzielle Hindernisse zu berücksichtigen. Dies ermöglicht eine Reduzierung des Auswahlraums für mögliche weitere Entscheidungen und somit geringe Rechnungsaufwände.

Gemäß einem Ausführungsbeispiel ist die Kollisionsvermeidungseinrichtung ausgebildet, um für eine Mehrzahl von neuen Fahrtaufträgen eine Mehrzahl von korrespondierenden Trajektorien als jeweils zeitoptimale Geschwindigkeitsvorgabe für das Durchqueren der Trajektorie zu erhalten, und um für die Mehrzahl der neuen Trajektorien mögliche Kollisionen der Fahrzeuge untereinander zu bestimmen, und um die möglichen Kollisionen innerhalb der neuen Fahrtaufträge zu vermeiden, indem zumindest eine der Geschwindigkeitsvorgaben angepasst wird. Dies ermöglicht die Abstimmung neuer Fahrtaufträge untereinander, so dass diese sich untereinander berücksichtigen können.

Gemäß einem Ausführungsbeispiel werden mittels veränderter Geschwindigkeitsvorgaben global für die Mehrzahl von Fahrzeugen insgesamt zeitoptimierte kollisionsfreie Fahrtaufträge erhalten. Dadurch werden nicht nur einzelne Fahrzeuge optimiert, sondern der Gesamtdurchsatz des Sortiersystems optimiert.

Gemäß einem Ausführungsbeispiel ist die Kollisionsvermeidungseinrichtung ausgebildet, um zu bestimmen, für welches der an der möglichen Kollision beteiligten Fahrzeuge die Geschwindigkeitsvorgabe anzupassen ist. Eine entsprechende Abwägung ermöglicht es, den Gesamtdurchsatz des Sortiersystems hoch beizubehalten, auch wenn einzelne Fahrzeuge hierdurch stärker verlangsamt werden.

Gemäß einem Ausführungsbeispiel ist die Kollisionsvermeidungseinrichtung ausgebildet, um zumindest eines aus einer vordefinierten Priorität, einer Exhaustionsmethode und einer Kombination hieraus zu verwenden, um zu bestimmen, für welches der an der möglichen Kollision beteiligten Fahrzeuge die Geschwindigkeitsvorgabe anzupassen ist. Dies ermöglicht die Optimierung des Gesamtdurchsatzes basierend auf entsprechenden Kriterien, etwa da es auch bei einem gewünschten hohen Gesamtdurchsatz möglicherweise Transportaufträge gibt, die zu bevorzugen sind.

Gemäß einem Ausführungsbeispiel ist die Kollisionsvermeidungseinrichtung ausgebildet, um mögliche Kollisionen für eine Mehrzahl von neuen Fahrtaufträgen zu bestimmen, und um die Geschwindigkeitsvorgaben an der den Fahrtaufträgen von der Koordinierungseinrichtung zugeordneten Geschwindigkeitsprofile aufeinander abzustimmen. Bereits übermittelte Geschwindigkeitsprofile bleiben dabei unverändert. Dies ermöglicht die Anpassung neuer Fahrten an bereits bestehende oder abgestimmte Fahrten.

Gemäß einem Ausführungsbeispiel ist die Kollisionsvermeidungseinrichtung ausgebildet, um bereits veränderte Geschwindigkeitsvorgaben, die bereits an Fahrzeugen ermittelt wurden, als unveränderlich zu behandeln, bis der Fahrtauftrag auf der zugewiesenen Trajektorie beendet ist.

Gemäß einem Ausführungsbeispiel ist der Startpunkt und/oder ein Endpunkt ein ortsfester Bereich im Sortiersystem. Alternativ oder zusätzlich kann einer der Startpunkte und/oder einer der Endpunkte auf der Trajektorie basieren und somit über unterschiedliche Trajektorien veränderlich sein. Dies ermöglicht eine hohe planungstechnische Flexibilität.

Gemäß einem Ausführungsbeispiel sind die Mehrzahl von Fahrzeugen holonomische Fahrzeuge oder umfasst zumindest solche Fahrzeuge. Holonomische Fahrzeuge eignen sich besonders für die mit den beschriebenen Ausführungsbeispielen möglichen flexiblen Trajektorien und hohen Geschwindigkeiten.

Gemäß einem Ausführungsbeispiel ist die Koordinierungseinrichtung ausgebildet, um den neuen Fahrtauftrag als einen gemeinsamen Fahrtauftrag an einen Fahrzeugverbund oder eine Fahrzeugformation für eine gemeinsame Fahrt mehrerer Fahrzeuge entlang der Trajektorie zu übermitteln. Dies ermöglicht auch den Transport großer und/oder schwerer Objekte.

Ein weiteres Ausführungsbeispiel der vorliegenden Erfindung stellt eine Sortiersystemsteuerungseinrichtung bereit. Diese weist beispielsweise die hierin beschriebene Koordinierungseinrichtung und die Kollisionsvermeidungseinrichtung sowie eine Schnittstelle zum Ausgeben des neuen Fahrtauftrags auf.

Weitere Ausführungsbeispiele beziehen sich auf Verfahren zum Betreiben eines Sortiersystems beziehungsweise einer Sortiersystemsteuerungseinrichtung.

Weitere vorteilhafte Ausführungsformen sind der Gegenstand abhängiger Patentansprüche.

Unter Bezugnahme auf die beiliegenden Zeichnungen werden nachfolgend besonders bevorzugte Ausführungsformen näher erläutert. Dabei zeigen:
- Fig. 1: ein schematisches Blockdiagramm eines Sortiersystems gemäß einem Ausführungsbeispiel;
- Fig. 2: eine schematische Darstellung eines Teils eines Sortiersystems gemäß einem Ausführungsbeispiel, bei dem beispielhafte Bereiche dargestellt sind, die als Startpunkt und/oder Endpunkt für eine Trajektorie genutzt werden können;
- Fig. 3a-c: schematische Graphen zur Erläuterung einer Bestimmung einer Geschwindigkeitsvorgabe für eine Trajektorie gemäß einem Ausführungsbeispiel; und
- Fig. 4a-f: schematische Darstellungen bekannter Behinderungen in einem Sortiersystem.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Nachfolgend beschriebene Ausführungsbeispiele werden im Zusammenhang mit einer Vielzahl von Details beschrieben. Ausführungsbeispiele können jedoch auch ohne diese detaillierten Merkmale implementiert werden. Des Weiteren werden Ausführungsbeispiele der Verständlichkeit wegen unter Verwendung von Blockschaltbildern als Ersatz einer Detaildarstellung beschrieben. Ferner können Details und/oder Merkmale einzelner Ausführungsbeispiele ohne Weiteres mit einander kombiniert werden, solange es nicht explizit gegenteilig beschrieben ist.

Hierin beschriebene Ausführungsbeispiele beziehen sich auf die Bewegung von Fahrzeugen entlang von Trajektorien. In manchen der hierin beschriebenen Ausführungsbeispiele ist eine solche Trajektorie von einem Startpunkt zu einem Endpunkt beschrieben, dergestalt, dass an dem Startpunkt beispielsweise ein Transportgut aufgenommen werden kann und an einem Endpunkt abgegeben werden kann. Die hierin beschriebenen Ausführungsbeispiele sind jedoch nicht hierauf beschränkt. Vielmehr kann ein Startpunkt oder Endpunkt auch ein anders gestalteter Punkt oder Bereich in dem Sortiersystem sein, beispielsweise ein Weg, an dem in einem anderen räumlichen Bereich des Sortiersystems gewechselt wird, beispielsweise ein Ausgang oder Eingang einer Transportguthalle oder Lagerhalle. Auch können die Startpunkte oder Endpunkte beziehungsweise Startbereiche oder Endbereiche auch dynamisch betrachtet werden und beispielsweise ein Start oder ein Ende einer Teiltrajektorie auf einem Weg von einem Transportgutaufnahmepunkt zu einem Transportgutabgabepunkt sein, so dass derartige Startpunkte oder Endpunkte auch beliebig im Raum und entlang von Trajektorien verteilt sein können.

Ausführungsbeispiele sowie die erfinderische Kernidee basieren auf Überlegungen, die kinodynamische Wegplanung in fahrzeugbasierten Sortiersystemen einzusetzen. Das bedeutet, bei manchen der hierin beschriebenen Ausführungsbeispielen zur Berechnung der Bahnkurven und Geschwindigkeiten wird eine kinodynamische Wegplanung verwendet. Gegenüber klassischen Methoden ermittelt die kinodynamische Wegplanung nicht allein einen kollisionsfreien Weg durch eine Umgebung mit Hindernissen, was eine kinematische Randbedingung bedeutet, sondern berücksichtigen entlang dieses Weges auch die physikalisch maximal möglichen Geschwindigkeiten und Beschleunigungen, also dynamische Randbedingungen. Damit soll insbesondere die Aufgabe gelöst werden, für welche Kombination aus Geschwindigkeit und Bahnkurve sich die minimal mögliche Fahrtzeit ergibt, bei der das Fahrzeug gerade noch nicht unkontrolliert ausbricht. Kinodynamische Wegplanung beinhaltet eine planerische Komponente, die vorausschauende Wegplanung, die offline erfolgen kann, und eine reaktive Komponente, die online im Betrieb erfolgen kann, um eine Kontrolle der Stabilität der Fahrzeugbewegung während der Ausführung zu ermöglichen. Sie stellt in Summe hohe Anforderungen an die Leistungsfähigkeit der eingesetzten Algorithmen und Bordrechner, denn die ermittelte Route muss kollisionsfrei sein und die Trajektorie des Fahrzeugs entlang der Route muss den dynamischen Randbedingungen genügen. Außerdem soll die ermittelte Route optimal sein, beispielsweise eine kürzeste Strecke zum Ziel aufweisen. Ein Erfordernis besteht darin, solche Berechnungen zuverlässig und in Echtzeit bereitzustellen.

Ausführungsbeispiele sind darauf gerichtet, das technische Problem zu lösen, viele Fahrzeuge mit ihren komplexen kinodynamischen Wegplanungen, also Bahnkurven und Geschwindigkeitsprofilen, so zu koordinieren, dass keine Behinderungen der Fahrzeuge untereinander entstehen, wie sie im Zusammenhang mit der Fig. 4a bis 4f beschrieben sind, und gleichzeitig die geforderte logistische Leistung in transportierten Paketen pro Stunde erreicht wird. Eine zusätzliche Herausforderung hierfür stellen Verbünde aus mehreren Fahrzeugen dar, welche in Formation fahren, um beispielsweise gemeinsam einen größeren Transportauftrag oder einen Sperrguttransport zu realisieren.

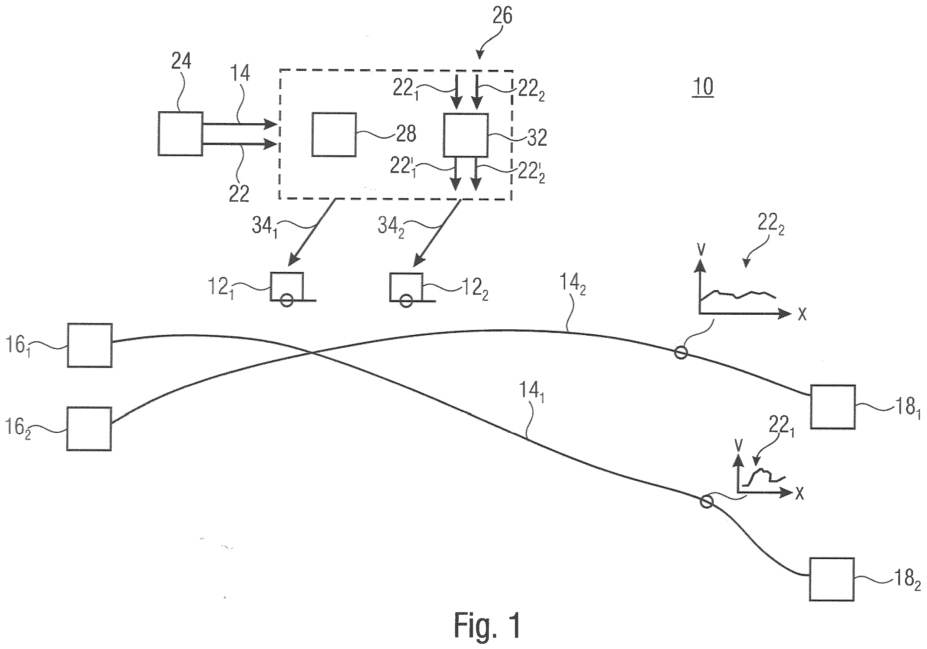

Fig. 1 zeigt ein schematisches Blockdiagramm eines Sortiersystems 10 gemäß einem Ausführungsbeispiel. Das Sortiersystem 10 weist eine Mehrzahl von Fahrzeugen 12₁ und 12₂ auf, die ausgebildet sind, um sich in dem Sortiersystem 10 entlang von Trajektorien 14₁ und 14₂ zu bewegen. Eine Anzahl von Fahrzeugen 12₁ und 12₂ ist dabei beliebig und kann zwei oder mehr, fünf oder mehr, zehn oder mehr, zwanzig oder mehr, oder gar hundert oder mehr betragen. Eine Anzahl von Trajektorien 14 ist unabhängig hiervon, auch wenn in Fig. 1 lediglich zwei Trajektorien 14₁ und 14₂ dargestellt sind. Diese sind beispielhaft so gewählt, dass die Trajektorie 14₁ einen Startpunkt 16₁ und einen Endpunkt 18₂ miteinander verbindet und eine Route zwischen den Punkten 16₁ und 18₂ beschreibt. Ebenso beschreibt die Trajektorie 14₂ einen Weg oder eine Route zwischen einem Startpunkt 16₂ und einem Endpunkt 18₁. Die Startpunkte und Endpunkte können in dem Sortiersystem beliebig nebeneinander oder verteilt voneinander angeordnet sein. Weitere mögliche Trajektorien sind beispielsweise eine Verbindung zwischen dem Startpunkt 16₂ und dem Endpunkt 18₂ und/oder zwischen dem Startpunkt 16₁ und dem Endpunkt 18₁. Gleichwohl ist es nicht erforderlich, dass zwischen jedem Startpunkt und jedem Endpunkt eine Trajektorie in dem Sortiersystem 10 vorgesehen ist, ebenso wenig ist es erforderlich, dass lediglich eine Trajektorie zwischen einem spezifischen Paar von einem Startpunkt zu einem Endpunkt möglich ist, es können vielmehr eine Mehrzahl oder Vielzahl von Trajektorienkandidaten möglich sein, worauf später im Detail eingegangen wird.

Jeder Trajektorie 14₁ und 14₂ kann eine Geschwindigkeitsvorgabe 22₁ beziehungsweise 22₂ zugeordnet sein, die auch als Geschwindigkeitsprofil bezeichnet werden kann. Die Geschwindigkeitsvorgabe 22₁ und/oder 22₂ kann eine Vorgabe für eine Geschwindigkeit v aufweisen, die über einen Weg x der Trajektorie 14₁ beziehungsweise 14₂ konstant aber auch veränderlich sein kann. Die Geschwindigkeitsvorgabe 22₁ und 22₂ kann eine Anweisung an das Fahrzeug bezüglich einer einzustellenden oder zu erreichenden oder zu fahrenden Geschwindigkeit entlang der Trajektorie oder eines Stücks hiervon umfassen.

Das Sortiersystem 10 umfasst eine Berechnungseinrichtung 24, die ausgebildet ist, um zwischen den Startpunkten 16 und den Endpunkten 18 eine Anzahl von Trajektorien 14 zu berechnen. Jeder der Trajektorie ist dabei eine Geschwindigkeitsvorgabe 22 für ein Fahrzeug 12 des Sortiersystems entlang der Trajektorie 14 zugeordnet. Hierbei ist es möglich, dass für die Verwendung unterschiedlicher Fahrzeuge, beispielsweise unterschiedlich im Hinblick auf Geschwindigkeiten, Transportvolumen, Transportgewicht, Energieverbrauch oder dergleichen, unterschiedliche Fahrzeuge in dem Sortiersystem 10 eingesetzt werden, so dass für denselben Weg abhängig für unterschiedliche Fahrzeuge unterschiedliche Geschwindigkeitsvorgaben existieren können, insbesondere im Hinblick auf die optionale Ausgestaltung als kinodynamische Wegplanungen.

Das Sortiersystem 10 umfasst ferner eine Sortiersystemsteuerungseinrichtung 26, die eine Koordinierungseinrichtung 28 und eine Kollisionsvermeidungseinrichtung 32 aufweisen kann. Die Koordinierungseinrichtung 28 und die Kollisionsvermeidungseinrichtung 32 können auch unabhängig von der Sortiersystemsteuerungseinrichtung 26 implementiert werden, beispielsweise als individuelle Komponenten und/oder als Komponente von Fahrzeugen. Alternativ oder zusätzlich kann die Berechnungseinrichtung 24 auch Teil der Sortiersystemsteuerungseinrichtung sein, wobei dies Ausführungsbeispiele nicht ausschließen soll, bei der die Informationen über die Trajektorien und/oder Geschwindigkeitsvorgaben von einem möglicherweise entfernt angeordneten Rechensystem erhalten werden, wobei hierzu sowohl Recheneinheiten eines möglicherweise entfernt angeordneten Dienstleisters in Betracht kommen als auch verteilte Rechendienstleistungen, beispielsweise sogenannte Cloud-Dienste. Selbst wenn eine Berechnung der Trajektorie in Teilen auf externen Recheneinheiten erfolgt, beziehen sich Ausführungsbeispiele ungeachtet dessen auf Sortiersysteme mit einer Berechnungseinrichtung, die die entsprechenden Rechenergebnisse dem vorliegenden Sortiersystem anpasst.

Die Koordinierungseinrichtung 28 ist ausgebildet, um Fahrtaufträge 34₁ und 34₂ an die Fahrzeuge 12₁ und 12₂ zu übermitteln. Jeder der Fahrtaufträge 34₁ und 34₂ beschreibt, definiert oder umfasst eine Fahrt von einem der Startpunkte 16ᵢ zu einem der Endpunkte 18ⱼ entlang einer der Trajektorien 14ₖ. Als Teil der Fahrtaufträge 34, die auch als Transportaufträge bezeichnet werden können, können auch die Geschwindigkeitsvorgaben 22₁ und 22₂ an die Fahrzeuge übermittelt werden. Alternativ kann auch eine Information, die zur Identifizierung einer in den Fahrzeugen vorgespeicherten Information eingerichtet ist, an die Fahrzeuge übermittelt werden, so dass die Route und/oder das Geschwindigkeitsprofil bereits auf den Fahrzeugen vorhinterlegt sind und beispielsweise unter Verwendung einer Kennung, eines Identifiers oder eines sonstigen Bezeichners mittels der Fahrtaufträge 34 in den Fahrzeugen ausgewählt werden. Alternativ oder zusätzlich können die Fahrzeuge auch eine Vorabinformation über verfügbare Routen aufweisen, so dass der Fahrtauftrag 34 als Auswahl einer möglichen Fahrt oder eine Trajektorie aus den vorab bekannten verstanden werden kann. Zu der Fahrt kann bereits vorab eine Geschwindigkeitsvorgabe in einem Speicher des Fahrtzeugs hinterlegt sein, etwa in demselben Speicher in welchem auch die möglichen Fahrten hinterlegt sind. Alternativ kann der Fahrtauftrag, das bedeutet die Trajektorie und/oder die Geschwindigkeitsvorgabe an das Fahrzeug übermittelt werden, etwa unter Verwendung von Funktechnologien.

Die Kollisionsvermeidungseinrichtung 32 kann zumindest teilweise als Teil einer Sortiersystemsteuerung und/oder zumindest teilweise in einem oder mehreren Fahrzeugen implementiert sein, etwa umfassend einen Prozessor, einen Mikrocontroller, ein Feldprogrammierbares Gatterarray (FPGA) oder dergleichen. Bei einer Implementierung zumindest teilweise in einem Fahrzeug kann bspw. jedes der betreffenden Fahrzeuge ausgebildet sein, um eine Kollision für einen eigenen Fahrtauftrag zu vermeiden und ggf. auch für andere Fahrzeuge entsprechende Untersuchungen vorzunehmen und/oder Instruktionen bereitzustellen.

Die Kollisionsvermeidungseinrichtung 32 ist ausgebildet, um für einen neuen Fahrtauftrag, das bedeutet, einem hinzuzufügenden Fahrtauftrag, eine Trajektorie dieses Fahrtauftrags auf mögliche Kollisionen mit einem weiteren Fahrzeug des Sortiersystems zu untersuchen. Das weitere Fahrzeug kann ein Fahrzeug sein, für das ebenfalls ein Fahrtauftrag beziehungsweise eine Fahrtplanung durchgeführt wird oder es kann sich um ein Fahrzeug handeln, das bereits unterwegs ist. So kann beispielsweise das Fahrzeug 12₁ bereits eine abgeschlossene Planung seiner Trajektorie aufweisen und der Fahrtauftrag 34₂ kann als neuer Fahrtauftrag in diesem Szenario betrachtet werden. Die Kollisionsvermeidungseinrichtung ist ausgebildet, um eine Kollisionsinformation zu erhalten, die eine mögliche Kollision des Fahrtauftrags 34₂ mit dem Fahrtauftrag 34₁ anzeigt, wobei als Kollision hierzu jedwede mögliche Art gegenseitiger Blockierung verstanden wird, wovon Beispiele in den Fig. 4a bis 4f geschrieben sind.

Die Kollisionsvermeidungseinrichtung 32 ist dabei ausgebildet, um die der Trajektorie des neuen Fahrtauftrags 34₂ zugeordnete Geschwindigkeitsvorgabe 22₂ basierend auf der Kollisionsinformation zu verändern, um eine veränderte Geschwindigkeitsvorgabe 22'₂ zu erhalten, um so die mögliche Kollision zu vermeiden. Eine Veränderung der Geschwindigkeitsvorgabe kann beispielsweise eine zumindest zeitweise Erhöhung oder Verringerung der Geschwindigkeitsvorgabe 22₂ bedeuten. Im Falle von kinodynamischer Wegplanung, wo versucht wird, jeweils die maximalen Beschleunigungen zu implementieren, kann die Veränderung eine Verringerung der Beschleunigung und/oder Geschwindigkeit bedeuten. Daraus wird deutlich, dass die Geschwindigkeitsvorgabe 22 nicht notwendigerweise auf die Angabe von einer tatsächlichen Geschwindigkeit gerichtet ist, sondern sich auch auf andere Parameter, wie beispielsweise Beschleunigung, einer dem Antrieb bereitzustellenden Energie oder anderer Stellgrößen beziehen kann.

Ausführungsbeispiele sehen jedenfalls vor, dass die Kollisionsvermeidungseinrichtung 32 alternativ oder zusätzlich zur Anpassung der Geschwindigkeitsvorgabe 22₂ die Geschwindigkeitsvorgabe 22₁ durch eine veränderte Geschwindigkeitsvorgabe 22'₁ anpasst. Prinzipiell ist es möglich, eine erkannte Kollision, die durch die Kollisionsinformation repräsentiert wird, durch Verändern einer oder mehrerer Geschwindigkeitsvorgaben an der Kollision beteiligter Fahrzeuge zu vermeiden.

Das Sortiersystem, etwa die Kollisionsvermeidungseinrichtung, ist ausgebildet, um den neuen Fahrtauftrag 34₂ umfassend eine Instruktion, die die Trajektorie, etwa 14₂, und die veränderte Geschwindigkeitsvorgabe 22'₂ umfasst, an das Fahrzeug 12₂ bzw. dessen Steuerung oder Fahrzeugsteuerung zu übermitteln. Hierzu können beispielsweise drahtlose Übertragungstechniken zum Einsatz kommen, wie beispielsweise 5G, WLAN (Wireless Local Area Network, drahtloses lokales Netzwerk), aber gegebenenfalls auch drahtgebundene oder andere Übertragungsweisen. Hierbei können unterschiedliche Ausgestaltungen der Ausführungsbeispiele zu Unterschieden im Hinblick an das Übermitteln an das Fahrzeug bzw. dessen Steuerung genannt werden, die bspw. darauf basieren, wie und an welchem Ort die Kollisionsvermeidungseinrichtung 32 implementiert ist und/oder welches Konzept oder Strategie zur Kollisionsvermeidung oder Priorisierung implementiert wird.

Oft kann eine Fernübermittlung der aktualisierten Geschwindigkeitsprofile an das Fahrzeug erfolgen, etwa wenn die Kollisionsvermeidungseinrichtung 32 an einem entfernten Ort implementiert ist. Aber auch bei einer Implementierung im Fahrzeug kann eine Übermittlung, innerhalb des Fahrzeugs, an dessen Steuerung also an das Fahrzeug erfolgen.

Zwar ist es möglich, dass bspw. bei einer Umsetzung der Kollisionsvermeidungseinrichtung 32 auf den Fahrzeugen selbst und einer Verwendung eines Round-Robin-Scheduling, das im Zusammenhang mit der Priorisierung noch näher erläutert wird, und das niedriger-priorisierte Fahrzeug die entsprechende Kollision prüft und ferner nur zwei Fahrzeuge an einer Kollision beteiligt sind, kann dieser Schritt auch entfallen. Da eine solche Kenntnis aber a priori selten verfügbar ist, kann dennoch eine Prüfung und/oder Übermittlung erfolgen. Bei vielen oder allen anderen Varianten kann nicht sichergestellt werden, dass nur exakt ein Fahrzeug ein verändertes Geschwindigkeitsprofil benötigt, insbesondere bei der Exhaustationsmethode als Priorisierungsstrategie, und gleichzeitig dieses Fahrzeug noch das prüfende Fahrzeug ist. Deshalb ist es im Rahmen einer separaten Implementierung von Kollisionsvermeidungseinrichtung 32 und der Steuerungseinrichtung des Fahrzeugs vorgesehen, eine entsprechende Übermittlung am das Fahrzeug/die Fahrzeuigsteueuerung vorzusehen, selbst wenn dies nicht, erfordert, dass ein entsprechendes Signal von außerhalb des Fahrzeugs kommt. Selbst wenn bspw. die Kollisionsvermeidungseinrichtung 32 zumindest teilweise in Software implementiert ist, welche im Fahrzeug läuft, so stellt dies einen separaten Software-Teil zu der Steuerungs-/Bewegungseinrichtung des Roboters/Fahrzeugs dar, sodass auch hier die Information "Übertragen" werden muss, auch wenn dann die Übertragung innerhalb des Fahrzeuges, zwischen diesen beiden Software-Teilen stattfindet.

Hieraus wird deutlich, dass das Sortiersystem 10 darauf ausgerichtet ist, die Routen und Geschwindigkeiten vorab zu berechnen und lediglich im Falle möglicher Kollisionen diese Kollisionen dadurch zu vermeiden, dass neu hinzuzufügende Fahrtaufträge eben keine Kollisionen verursachen, indem deren Geschwindigkeitsvorgaben entsprechend eingerichtet sind. Obwohl dies auch zu Ausgestaltungen führen kann, in denen ein Fahrzeug, das einmal auf dem Weg ist, solange mit einer vordefinierten Geschwindigkeitsvorgabe fährt, bis es beispielsweise sein Transportgut abliefert, ist es ebenfalls möglich, die Startpunkte 16 und/oder die Endpunkte 18 so zu legen, dass diese beispielsweise auf einem gewissen Zeitintervall basieren und/oder auf einer bestimmten Wegstrecke basieren und eine Neubestimmung, möglicherweise unter Berücksichtigung globaler Optimierungskriterien, der Geschwindigkeitsprofile für ein oder mehrere oder aller Fahrzeuge, die bereits unterwegs sind, erfolgt, noch bevor diese ihr Transportgut abliefern, was auch so verstanden werden kann, dass mehrere Trajektorien durchfahren werden ausgehend von einem Zeitpunkt, zu dem das Transportgut aufgenommen wird bis hin zu einem Zeitpunkt, zu dem das Transportgut abgegeben wird.

Es sei weiterhin darauf hingewiesen, dass obwohl in dem Sortiersystem 10 eine Unterscheidung zwischen Startpunkt und Endpunkt einer Trajektorie ausgeführt ist, ein entsprechender Punkt sowohl als Startpunkt als auch als Endpunkt verwendet werden kann, beispielsweise für unterschiedliche Trajektorien.

Nachfolgend wird Bezug genommen auf die Planungsphase, während derer die Trajektorien bestimmt werden. So kann die Berechnungseinrichtung 24 beispielsweise ausgebildet sein, um zwischen einem Startpunkt einer Anzahl möglicher Startpunkte und einem Endpunkt einer möglichen Anzahl von Endpunkten eine Mehrzahl von Trajektorienkandidaten zu berechnen.

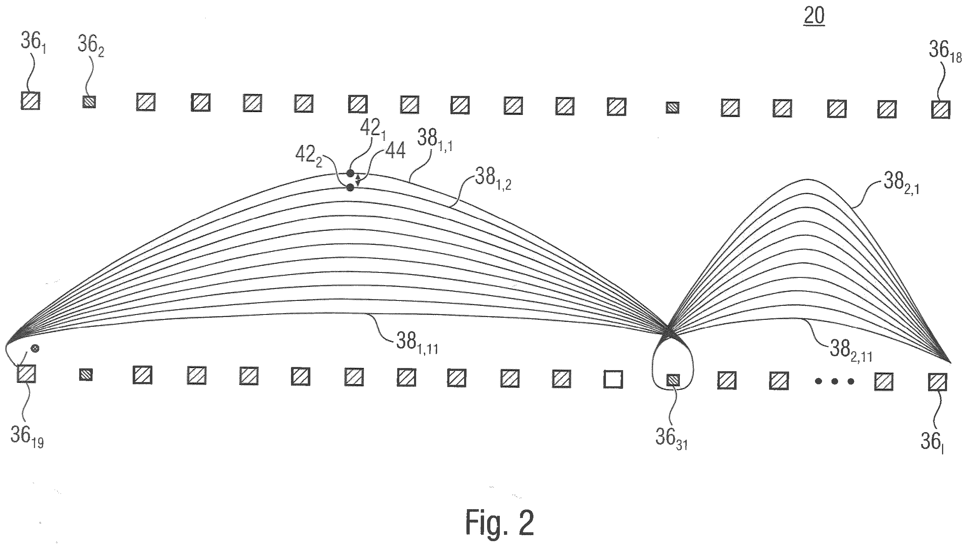

Hierzu wird Bezug genommen auf die Fig. 2, die eine schematische Darstellung eines Teils eines Sortiersystems 20 gemäß einem Ausführungsbeispiel darstellt. Beispielhaft sind Bereiche 36₁ bis 36ₗ dargestellt, von denen einige, manche oder alle sowohl als Startpunkt als auch als Endpunkt für eine Trajektorie in Betracht kommen.

Die Bereiche 36 können als Startpunkt und/oder Endpunkt einen ortsfesten Bereich in dem Sortiersystem beschreiben oder, alternativ, auf der Trajektorie basieren. Eine Gesamtmenge an Bereichen kann auch kombinatorisch aufgebaut sein, so dass manche Bereiche ortsfest sind und andere Bereiche auf der Trajektorie basieren, etwa ein Anfang und/oder ein Ende eines Teils einer Gesamtfahrstrecke, einen Halleneingang, einen Hallenausgang oder dergleichen.

Beispielhaft sind mehrere Trajektorienkandidaten 38_{m,n} dargestellt, wobei m eine Trajektorienkennung beschreibt, die im vorliegenden Ausführungsbeispiel 1 oder 2 ist und n eine Indizierung des jeweiligen Trajektorienkandidaten innerhalb der auszuwählenden Trajektorie oder Wegverbindung beschreibt. So kann die Berechnungseinrichtung 24 beispielsweise ausgebildet sein, um den Bereich 36₁₉ als Startpunkt und den Bereich 36₃₁ als Endpunkt für Kandidaten 38_{1,n} zu verwenden und den Bereich 36₃₁ als Startpunkt und den Bereich 36ₗ als Endpunkt für Trajektorienkandidaten 38_{2,m} zu verwenden. Es sei an dieser Stelle darauf hingewiesen, dass die Anzahl n der Trajektorienkandidaten für unterschiedliche Wegbereiche im vorliegenden Beispiel gleich ist, aber auch voneinander verschieden sein kann und eine Anzahl von zumindest 2, zumindest 3, zumindest 5, zumindest 10 oder zumindest 20 oder mehr betragen kann.

Die Koordinierungseinrichtung 28 kann ausgebildet sein, um einen der Trajektorienkandidaten als Trajektorie für den neuen Fahrtauftrag auszuwählen. Das bedeutet, die Koordinierungseinrichtung kann einen mehrerer möglicher Wege wählen. So können beispielsweise unterschiedliche Kandidaten eines Weges 38ₘ es ermöglichen, mehrere Fahrzeuge in kurzen zeitlichen Abständen fahren zu lassen, da diese dann nicht hintereinander, sondern nebeneinander fahren können.

Die Berechnungseinrichtung kann ausgebildet sein, um die Mehrzahl von Trajektorienkandidaten 38_{m,n} unter Berücksichtigung einer Trajektorienkrümmung zu berechnen. Die Berechnungseinrichtung 24 kann beispielsweise ausgebildet sein, um eine vordefinierte Anzahl von Trajektorienkandidaten zu bestimmen, die eine minimale Krümmung aufweisen, gegebenenfalls unter Berücksichtigung zusätzlicher Randbedingungen, wie Abstände zwischen den Trajektorien oder dergleichen. Das Bestimmen einer vorgegebenen Anzahl von am besten geeigneten Trajektorienkandidaten kann es ermöglichen, einen gewissen Spielraum bezüglich mehrerer unterschiedlicher Trajektorienkandidaten zu haben, d. h., es steht immer eine gewisse Anzahl an Optionen zur Verfügung. Alternativ oder zusätzlich kann die Berechnungseinrichtung 24 ausgebildet sein, um eine Anzahl von Trajektorienkandidaten zu bestimmen, die Trajektorienkrümmungen von höchstens einem vordefinierten Krümmungsschwellwert aufweisen. Das bedeutet, es können möglicherweise sämtliche Trajektorienkandidaten bestimmt werden, die gewissen Krümmungsrandbedingungen genügen, da zu starke Krümmungen möglicherweise zu geringen Beschleunigungen und/oder geringen Geschwindigkeiten führen können. Unter diesem Gesichtspunkt kann beispielsweise für den Weg zwischen den Bereichen 36₃₁ und 36ₗ eine andere Anzahl von Trajektorienkandidaten erhalten werden als für den Weg zwischen den Bereichen 36₁₉ und 36₃₁. Beide Kriterien können ohne weiteres auch miteinander kombinierbar sein, so dass beispielsweise eine feste Anzahl von Trajektorienkandidaten berechnet wird, die einer gewissen Krümmungsbedingung genügen. Andere oder zusätzliche Randparameter, beispielsweise eine bestimmte Weglänge, ein Abstand zu anderen Objekten oder dergleichen kann ebenfalls berücksichtigt werden. Es ist dabei anzumerken, dass in Bezug auf die Krümmung insbesondere eine maximale Beschleunigung des Fahrzeugs, das bedeutet, die Beschleunigungsmöglichkeit des Fahrzeugs einen wichtigen Beitrag liefern kann. Die maximal mögliche Beschleunigung im Zusammenhang mit der Krümmung kann für die physikalischen maximal mögliche Geschwindigkeit entlang des Pfads relevant sein oder diese bestimmen.

Gemäß einem Ausführungsbeispiel ist die Berechnungseinrichtung ausgebildet, um die Trajektorie basierend auf Splines zu berechnen. Optional kann die Berechnungseinrichtung 24 ausgebildet sein, um für Kontrollpunkte zwischen Startpunkt und Endpunkt, etwa für benachbarte Scheitelpunkte 42₁ und 42₂ einen Abstand 44 zu bestimmen, der eine Entfernung benachbarter Trajektorienkandidaten anzeigt. Dieser Abstand muss nicht notwendigerweise über die gesamte Trajektorie hin eingehalten werden und kann beispielsweise im Bereich des Startpunkts und/oder des Endpunkts anders gewählt werden oder entfallen.

Prinzipiell besteht bei der Bestimmung der Trajektorienkandidaten ein hohes Maß an Freiheitsgraden. Die Trajektorienkandidaten ermöglichen, dass vorhandene Freiflächen in dem Sortiersystem 10 gut bis maximal genutzt werden, so dass sich beispielsweise in einem breiteren Gang mehrere Fahrspuren bilden können, die parallel gefahren werden können. Darüber hinaus bieten mehrere Kandidaten für die Verbindung zweier Bereiche auch die Möglichkeit, auf andere Kandidaten auszuweichen, sollte eine Blockierung oder Kollision erkannt werden.

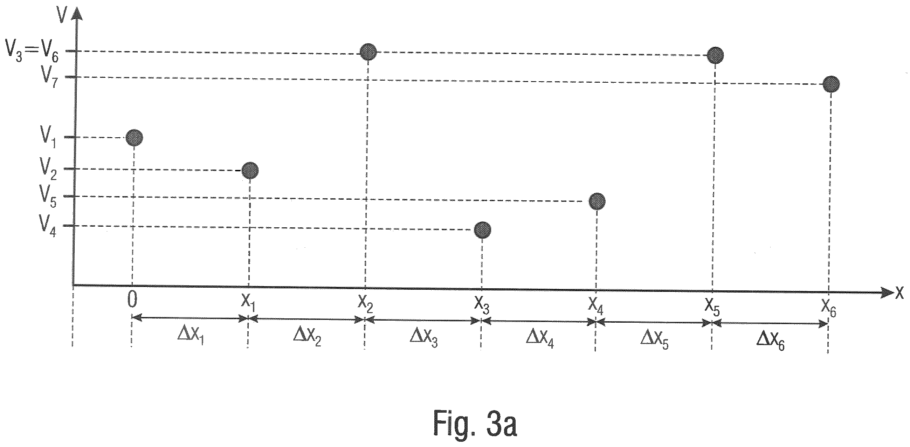

Für jeden der Kandidaten 38_{m,n} kann ein Geschwindigkeitsprofil, d. h., eine Geschwindigkeitsvorgabe berechnet werden, beispielsweise in Form eines zeitoptimalen Geschwindigkeitsprofils. Dies wird anhand der Figuren 3a-c beispielhaft erläutert.

So ist in Fig. 3a ein schematischer Graph dargestellt, bei dem eine gesamte Weglänge am Ort x₆ eines der Kandidaten 38_{m,n} aus Fig. 2 in mehrere Trajektorienabschnitte aufgeteilt sind, die jeweils Weglängen Δx₁ bis Δx₆ aufweisen. Möglicherweise aber nicht notwendigerweise sind die Trajektorienabschnitte Δx₁ bis Δx₆ äquidistant, das bedeutet, sie umfassen eine gleiche Weglänge.

Für jeden der Trajektorienabschnitte Δx₁ bis Δx₆, deren Anzahl zumindest 1, zumindest 2, zumindest 3, zumindest 5, zumindest 10 oder mehr betragen kann, kann die Berechnungseinrichtung eine Abschnittsgeschwindigkeitsvorgabe berechnen, um die Geschwindigkeitsvorgabe 22 basierend auf einer Kombination der Abschnittsgeschwindigkeitsvorgaben zu berechnen. Ferner wird für jeden der Abschnitte eine Maximalgeschwindigkeit berechnet, wie es in Fig. 3a dargestellt ist. Geschwindigkeiten V1 bis V7 entsprechen zu den jeweiligen Wegpunkten den Maximalgeschwindigkeiten. Hierzu werden beispielsweise die Krümmungen auf den jeweiligen Abschnitten betrachtet oder berücksichtigt und daraus die Maximalgeschwindigkeiten V1 bis V7 berechnet.

In anderen Worten zeigt Fig. 3a eine Festlegung der Maximalgeschwindigkeit an den Abschnitten der Bahnkurve.

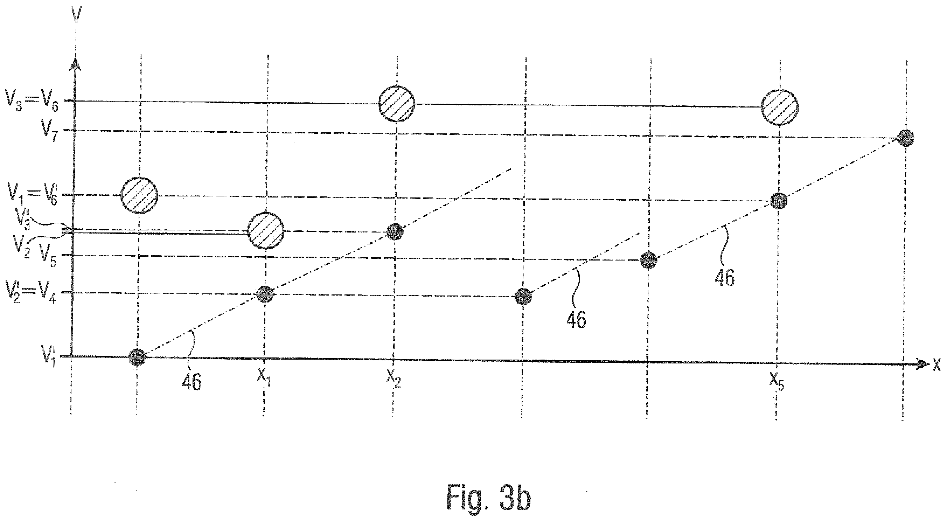

In Fig. 3b ist ein weiterer Schritt zur Bestimmung der Geschwindigkeitsvorgaben dargestellt. Hierzu werden die Abschnitte Δx₁ bis Δx₆ sequenziell durchiteriert, beispielsweise beginnend von der Wegstrecke 0 bis hin zum Ende x₆ und zwar beispielsweise unter Berücksichtigung der Beschleunigung der Fahrzeuge. Hieraus ergeben sich beispielsweise zum Beginn (x = 0) der Fahrt Abweichungen, indem die Beschleunigung, exemplarisch dargestellt als Gerade 46, ausgehend von der tatsächlichen Geschwindigkeit angetragen wird. Am Anfang des Wegs (x = 0) ist die Geschwindigkeit beispielsweise 0, was jedoch für andere Ausführungsbeispiele nicht zwingend ist. An anderen Starts und Wegstrecken kann die Geschwindigkeit auch ungleich 0 sein. Die Steigung der Geraden 46 bestimmt dabei, welche Maximalgeschwindigkeit V2' tatsächlich am Ort x1 erreicht werden kann, so dass hier eine Korrektur stattfindet, ebenso wie für die Geschwindigkeit V3' bei x₂. Ferner findet basierend auf der Steigung der gleichbleibenden Beschleunigung 46 eine Korrektur bei x₅ statt, so dass hier eine angepasste Geschwindigkeit V₆' erhalten wird. Es versteht sich, dass die Beschleunigung 46 zwar als Gerade darstellbar ist, dass aber andere Fahrtzeuge andere Beschleunigungsprofile aufweisen können, etwa gekrümmte Bahnen.

In anderen Worten werden die Abschnitte von Anfang bis Ende durchiteriert und die maximale Geschwindigkeit auf Basis der Beschleunigung berechnet. Fig. 3b eine Berechnung der real erreichbaren Maximalgeschwindigkeit.

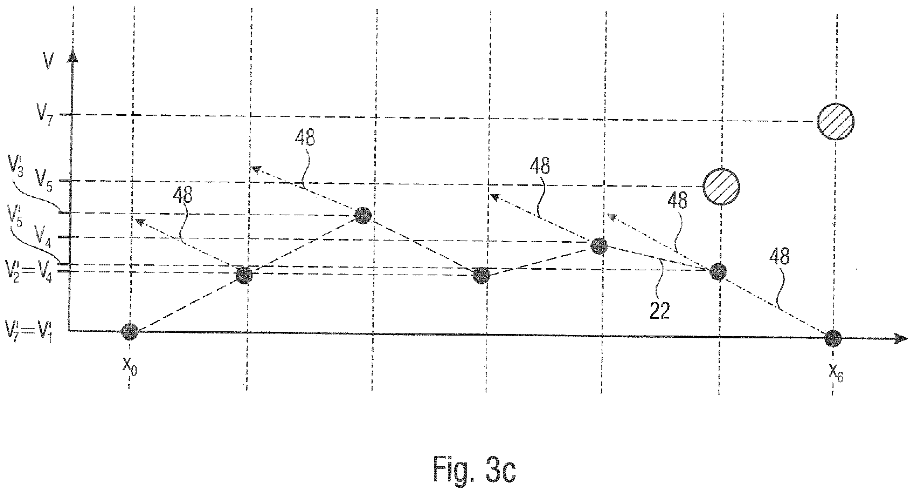

In Fig. 3c ist ferner dargestellt, wie analog die negative Beschleunigung, das Abbremsen berücksichtigt wird, um beispielsweise bei x₆ auf die Zielgeschwindigkeit, im vorliegenden Beispiel 0, zu kommen. In anderen Beispielen kann die Endgeschwindigkeit ungleich null sein, etwa wenn von einem Bereich in einen andere gefahren wird und in dem neuen Bereich eine neue Trajektorie beginnt.

So kann beispielsweise von x₆ startend hin zu x₀ unter Berücksichtigung einer möglicherweise maximalen negativen Beschleunigung 48 durch Auftragen entsprechender beispielhafter aber fahrzeugabhängiger Geraden die Bremsfähigkeit berücksichtig werden, wobei ebenfalls eine Iteration erfolgt. Dadurch kann sich kombinatorisch die Geschwindigkeitsvorgabe 22 in den einzelnen Abschnitten und insgesamt für die Trajektorie bestimmen lassen.

In anderen Worten werden zum Ende die Abschnitte rückwärts durchlaufen, so dass die maximal erreichbare Geschwindigkeit auch die Bremsmanöver berücksichtigt, wie es in Fig. 3c dargestellt ist. Hierdurch werden für jeden Trajektorienabschnitt durch die Berechnungseinrichtung die Krümmung des Trajektorienabschnitts, die maximale Beschleunigung des Fahrzeugs sowohl als positive als auch als negative Beschleunigung, verwendet, um eine Maximalgeschwindigkeit zu berechnen. Basierend auf Maximalgeschwindigkeiten, einer Geschwindigkeitsvorgabe zu Beginn des Trajektorienabschnitts, Fig. 3b, und einer Geschwindigkeitsvorgabe an einem Ende des Trajektorienabschnitts, Fig. 3c, kann die Abschnittsgeschwindigkeitsvorgabe berechnet werden, indem die maximal erreichbare oder gewünschte Geschwindigkeit der ursprünglichen Vorgabe aus Fig. 3a angepasst wird. Die Fig. 3c zeigt eine Berechnung der maximal erreichbaren Geschwindigkeit unter Berücksichtigung der Bremsmanöver.

Die Berechnungseinrichtung kann gemäß einem Ausführungsbeispiel ausgebildet sein, um die Geschwindigkeitsvorgabe kinodynamisch als zeitoptimierte Geschwindigkeitsvorgabe zu berechnen. Das bedeutet, dass für jede Trajektorie die Geschwindigkeitsvorgabe so bestimmt wird, dass eine kürzest mögliche Zeit benötigt wird, um die Trajektorie zu durchfahren.

Gemäß einem Ausführungsbeispiel ist die Koordinierungseinrichtung ausgebildet, um für den neuen Fahrtauftrag die Trajektorie aus einer Mehrzahl von Trajektorienkandidaten auszuwählen, etwa einen der n-Kandidaten für einen bestimmten Weg. Die Mehrzahl von Trajektorienkandidaten kann dabei bereits an Fahrzeuge zugewiesene Trajektorien in bestehenden Fahrtaufträgen berücksichtigen. Das bedeutet, dass Fahrzeuge, die gleich starten oder bereits unterwegs sind, Trajektorienkandidaten bereits belegen können, was durch die Koordinierungseinrichtung berücksichtigt wird.

Gemäß einem Ausführungsbeispiel ist die Kollisionsvermeidungseinrichtung 32 ausgebildet, um die Geschwindigkeitsvorgabe für die bereits zugewiesenen Trajektorien bestehender Fahrtaufträge nicht anzupassen, so dass beispielsweise eine Verringerung der als Ergebnis der Fig. 3c erhaltenen Geschwindigkeitsvorgabe lediglich für die neu hinzuzufügenden oder in Übergabeabschnitten zu aktualisierenden Geschwindigkeitsvorgaben erfolgt.

Gemäß einem Ausführungsbeispiel ist die Koordinierungseinrichtung 28 dabei ausgebildet, um Fahrzeuge auf bereits zugewiesenen Trajektorien für die Auswahl der Trajektorie als potenzielles Hindernis zu berücksichtigen. Diese können durch Auswahl entsprechender Trajektorien, die an dem möglicherweise bewegten Hindernis vorbeilaufen und/oder durch Anpassung der Geschwindigkeitsvorgabe berücksichtigt werden.

Gemäß einem Ausführungsbeispiel ist die Kollisionsvermeidungseinrichtung dabei ausgebildet, um für eine Mehrzahl von neuen Fahrtaufträgen, das bedeutet, mehrere Fahrzeuge sind mit Fahrtaufträgen zu versorgen, eine Mehrzahl von korrespondierenden Trajektorien als jeweils zeitoptimale Geschwindigkeitsvorgabe für das Durchqueren der Trajektorie zu erhalten. Die Kollisionsvermeidungseinrichtung 32 kann für die Mehrzahl der neuen Trajektorien mögliche Kollisionen der Fahrzeuge untereinander, innerhalb der neuen Fahrtaufträge, bestimmen und die möglichen Kollisionen innerhalb der neuen Fahrtaufträge vermeiden, indem zumindest eine der Geschwindigkeitsvorgaben angepasst wird. Dies ermöglicht eine wechselseitige Rücksichtnahme der Fahrtaufträge aufeinander, während dennoch bereits bestehende Fahrtaufträge unangetastet bleiben können. An dieser Stelle wird nicht nur das Ziel verfolgt, ein einzelnes Fahrzeug zeitoptimal zu steuern und mit dem Rest der Fahrzeuge lediglich Kollisionen zu vermeiden. Vielmehr ist es das Ziel hierin beschriebener Ausführungsbeispiele, die Zeit für alle Fahrzeuge zu optimieren unter Berücksichtigung der Nebenbedingung einer Kollisionsfreiheit. Auch wenn neue Geschwindigkeitsprofile/Aufträge untereinander gegenüber bestehenden Aufträgen angepasst werden, können die bestehenden Aufträge in einer nächsten Iteration, etwa einem nächsten Wegabschnitt oder einem nächsten Zeitabschnitt, wenn eine aktualisierte Berechnung erfolgt, dennoch angepasst werden. Unter Bezugnahme auf die Figuren 3b und 3c ist dies beispielsweise für Trajektorien möglich, bei denen die Anfangsgeschwindigkeit und/oder die Endgeschwindigkeit ungleich 0 ist.

Gemäß einem Ausführungsbeispiel wird somit vermittels veränderter Geschwindigkeitsvorgaben global für die Mehrzahl von Fahrzeugen insgesamt eine Menge von zeitoptimierten kollisionsfreien Fahrtaufträgen erhalten.

Die Kollisionsvermeidungseinrichtung 32 kann dabei ausgebildet sein, um zu bestimmen, für welches der an der möglichen Kollision beteiligten Fahrzeuge die Geschwindigkeitsvorgabe anzupassen ist. Hierbei kann bei einem neuen Fahrtauftrag für eines der beiden beteiligten Fahrzeuge oder für beide der beteiligten Fahrzeuge die Geschwindigkeitsvorgabe angepasst, beispielsweise abschnittsweise reduziert werden, wobei dies ohne Einschränkungen auch für eine Anzahl von mehr als zwei Fahrzeugen möglich ist, die an einer potenziellen Kollision beteiligt wären.

Die Kollisionsvermeidungseinrichtung 32 kann dabei ausgebildet sein, um zumindest eine vordefinierte Priorität, eine Exhaustionsmethode (engl.: exhaustive search) oder eine Kombination der beiden zu implementieren. So kann beispielsweise bei einer Priorität eine Priorität der Ware berücksichtigt werden und/oder die Priorität kann dem Fahrzeug zugeordnet sein. Dies ermöglicht eine feste Rangordnung oder Reihenfolge, so dass stets basierend auf der Reihenfolge klar ist, für den Fahrtauftrag welches Fahrzeugs eine Anpassung vorzunehmen ist. Diese Informationen kann den Fahrzeugen bekannt sein und ist zumindest der zentralen Koordinierungsstelle, der Kollisionsvermeidungseinrichtung, bekannt. Ein Beispiel für eine solche vordefinierte Priorisierung ist das sogenannte Round-Robin-Scheduling.

Gemäß einem Ausführungsbeispiel ist die Kollisionsvermeidungseinrichtung ausgebildet, um mögliche Kollisionen für eine Mehrzahl von neuen Fahrtaufträgen zu bestimmen, und um die Geschwindigkeitsvorgaben der den Fahrtaufträgen von der Koordinierungseinrichtung zugeordneten Geschwindigkeitsprofile aufeinander abzustimmen, wobei optional bereits übermittelte Geschwindigkeitsprofile bzw. angepasste Geschwindigkeitsprofile unverändert bleiben können.

Gemäß einem Ausführungsbeispiel ist die Kollisionsvermeidungseinrichtung 32 ausgebildet, um bereits veränderte Geschwindigkeitsvorgaben als unveränderlich zu behandeln, bis der Fahrtauftrag der zugewiesenen Trajektorie beendet ist. Dies kann sich in manchen Ausführungsbeispielen auch lediglich auf die Teilstrecke der insgesamt zu fahrenden Strecke beziehen.

Gemäß einem Ausführungsbeispiel ist die Koordinierungseinrichtung 28 ausgebildet, um den neuen Fahrtauftrag als einen gemeinsamen Fahrtauftrag an einen Fahrzeugverbund oder eine Fahrzeugformation für eine gemeinsame Fahrt entlang der Trajektorie zu ermitteln, etwa für besonders schwere Güter und/oder besonders sperrige Güter. Die Trajektorie kann so gewählt sein, dass Fahrzeuge der Formation sich basierend auf der Formation gegenüber der Trajektorie versetzt anordnen, beispielsweise ein Fahrzeug leicht links davon und ein Fahrzeug leicht rechts davon oder dass sich Fahrzeuge entlang oder parallel zu der Trajektorie in einem unveränderlichen Abstand zueinander bewegen.

Hierin beschriebene Ausführungsbeispiele eignen sich insbesondere für holonomische Fahrzeuge, deren Antriebseinrichtungen beispielsweise sogenannte "Allseitenräder" oder "omni-wheels" umfassen. Insbesondere eine Kombination mit einer Berechnung der Geschwindigkeitsvorgabe als kinodynamische Berechnung zum Erhalten zeitoptimierter Geschwindigkeitsvorgaben liefern hierin beschriebene Ausführungsbeispiele erhebliche Vorteile.

Unter erneuter Bezugnahme auf die Fig. 1 sehen Ausführungsbeispiele ebenfalls die Implementierung einer Sortiersystemsteuerungseinrichtung vor, die beispielsweise eine Koordinierungseinrichtung, etwa die Koordinierungseinrichtung 28, umfasst, die ausgebildet ist, um Fahrtaufträge an eine Mehrzahl von Fahrzeugen zu übermitteln, wobei jeder Fahrtauftrag eine Fahrt von einem Startpunkt zu einem Endpunkt entlang einer jeweiligen Trajektorie umfasst. Jeder Trajektorie ist dabei eine Geschwindigkeitsvorgabe für ein Fahrzeug entlang der Trajektorie zugeordnet. Ferner umfasst die Sortiersystemsteuerungseinrichtung 26 eine Kollisionsvermeidungseinrichtung, etwa die Kollisionsvermeidungseinrichtung 32, die ausgebildet ist, um für einen neuen Fahrtauftrag eine zugehörige Trajektorie auf mögliche Kollisionen mit einem Fahrtauftrag zu untersuchen, um eine Kollisionsinformation zu erhalten, die eine mögliche Kollision anzeigt, und die der Trajektorie zugeordnete Geschwindigkeitsvorgabe basierend auf der Kollisionsinformation zu verändern, um eine veränderte Geschwindigkeitsvorgabe zu erhalten, um so die mögliche Kollision zu vermeiden. Die Sortiersystemsteuerungseinrichtung umfasst eine Schnittstelle zum Ausgeben des neuen Fahrtauftrags umfassend eine Instruktion, die die Trajektorie und die veränderte Geschwindigkeitsvorgabe umfasst. Das bedeutet, die Sortiersystemsteuerungseinrichtung 26 kann auch unabhängig von weiteren Komponenten des Sortiersystems 10 implementiert oder ausgeliefert werden und erst später zu einem Gesamtsystem zusammengefügt werden.

Gemäß einem Ausführungsbeispiel umfasst die Sortiersystemsteuerungseinrichtung 26 eine Berechnungseinrichtung, etwa die Berechnungseinrichtung 24, die ausgebildet ist, um zwischen einer ersten Anzahl von Startpunkten und einer zweiten Anzahl von Endpunkten eine dritte Anzahl von Trajektorien zu bestimmen, etwa jeweils eine Vielzahl von Trajektorienkandidaten oder lediglich eine Trajektorie, wobei die Koordinierungseinrichtung ausgebildet ist, um Fahrtaufträge an die Trajektorien zuzuweisen.

Die Überlegungen zu hierin beschriebenen Ausführungsbeispielen werden unter Bezugnahme auf ein konkretes Ausführungsbeispiel noch einmal in anderen Worten erläutert. Als Hintergrund für diese Erläuterungen werden folgende Gegebenheiten für hierin beschriebene Fahrzeuge, die auch als LoadRunner bezeichnet werden können, und den betreffenden Einsatzort angenommen:
- Die Fahrzeuge, d. h. die Load Runner, können eine hohe Geschwindigkeit sowie hohe Beschleunigungen realisieren. Beispielsweise können die Fahrzeuge Höchstgeschwindigkeiten von 10 m pro Sekunde und mehr aufweisen und Beschleunigungen von 4 bis 5 m/s² oder mehr aufweisen;
- Dies hat den Nachteil, dass mit diesen Fahrzeugen nicht oder schwerlich auf dynamisch auftretende Hindernisse, etwa einem Menschen, der durch die Fläche oder die Fahrbahn läuft, reagiert werden kann, da bei maximaler Geschwindigkeit ein Bremsweg von ca. 10 bis 12 m oder mehr entstehen kann;
- Daraus folgt, dass die Fahrzeuge nicht ohne weiteres reaktiv und mit "Schwarm-Heuristiken" betrieben werden können, sondern bevorzugt mit im Voraus geplanten Trajektorien gearbeitet wird;
- Durch den Einsatz von omni-wheels, Allseitenrädern; ist ein Load Runner ein sogenannter "holonomischer Roboter". Das bedeutet, dass die Anzahl der steuerbaren Freiheitsgrade gleich der Anzahl an insgesamt im System vorhandenen Freiheitsgraden ist. Als holonomischer Roboter kann eine Einrichtung verstanden werden, die in der Lage ist, jede beliebige Trajektorie im sogenannten "Konfigurationsraum (engl.: configuration space), d. h. effektiv der Raum, welcher aus den drei Freiheitsgraden mit den Positionen X, Y und der Rotation gebildet wird, zu durchfahren, solange die Randbedingung der Beschleunigung eingehalten wird. Für den Fall einer fliegenden Einrichtung kann auch die z-Komponente betrachtet werden. Im Gegensatz dazu stehen beispielsweise Fahrzeuge wie ein Automobil, welches nicht in der Lage ist, seitlich in eine Parklücke zu fahren. Hier müssen verhältnismäßig komplizierte Trajektorien gewählt werden, um das Fahrzeug 2 m seitlich zu bewegen, beispielsweise da das Automobil nur zwei steuerbare Freiheitsgrade aufweist. Hierzu wird angenommen, dass Systeme von auf dem Boden fahrenden Fahrzeugen insgesamt drei Freiheitsgrade aufweisen, zwei für die Position X und Y und einen für die Rotation;
- Um Fahrzeuge in einem Sortiersystem einzusetzen ist es unter anderem wichtig, dass die Trajektorien zwischen den Einspeisepunkten, d. h. der Ort, wo ein neues Paket aufgenommen wird, und den Endstellen optimal sind. In der Regel werden keine optimalen Trajektorien von und zu beliebigen Punkten im Raum benötigt, da lediglich der Sortierkreislauf von Bedeutung ist, der die Punkte vorgeben kann. Zusätzlich ist es möglich, im Layout des Sortiersystems eine große freie Fahrfläche zur Verfügung zu stellen. Dieser Punkt kann besondere Bedeutung entfalten, da sich durch ihn der große Nachteil, dass die Trajektorien gemäß Ausführungsbeispielen für eine gewisse Zeit statisch vorzuberechnen sind, aufhebt. Eine der Kernideen des Lösungsverfahrens ist, dass sich die beiden Gegebenheiten zunutze gemacht werden und das Multi-Agent-Pathfinding-Problem, welches grundsätzlich sehr schwierig zu lösen ist, insbesondere bei kinodynamischer Wegplanung, etwas zu entschärfen, indem die Pfadplanung nach kinodynamischen Randbedingungen an den Anfang gestellt wird, etwa durch die Berechnungseinrichtung und die Koordinierungseinrichtung, und die eigentliche Kollisionsvermeidung der Fahrzeuge über die Geschwindigkeitsprofile entlang dieser Pfade realisiert wird, etwa durch die Kollisionsvermeidungseinrichtung.

Ein erfindungsgemäßes Verfahren lässt sich grundlegend in folgende drei Schritte unterteilen:
1. Für einen Zeitraum T werden alle in den nächsten Schritten verwendbaren Pfade bestimmt. Für ein Sortierszenario bedeutet dies, konkret die Pfade von allen im Zeitraum T verwendeten Quellen zu allen in dem Zeitraum T verwendeten Senken inklusive Rückführung der Fahrzeuge an beispielsweise eine Ladestation oder eine Pufferzone. Es können in der Regel mehrere Kandidaten für eine Verbindung erzeugt werden, siehe hierzu die Ausführungen in Fig. 2, um mehr Ausweichmöglichkeiten zu bieten. Der Zeitraum T kann dabei vergleichsweise groß sein und beispielsweise zumindest 1 Minute, zumindest 5 Minuten oder zumindest 10 Minuten betragen.
2. Die Zuweisung der Transportaufträge an die Fahrzeuge. Hierdurch wird festgelegt, welches Fahrzeug "von wo nach wo" zu fahren hat. Jedes Fahrzeug prüft alle vorhandenen Kandidaten für seinen Fahrtauftrag. Die Auswahl eines Trajektorienkandidaten als Kandidat kann somit zentral oder dezentral implementiert sein, was bedeutet, dass die Sortiersystemsteuerungseinrichtung 26 bzw. die Koordinierungseinrichtung 28 auch lokal in einem Fahrzeug implementiert sein kann. In einem solchen Fall kann es die getroffene Auswahl an die Sortiersystemsteuerungseinrichtung zurückmelden oder auch die Kollisionsvermeidung vornehmen.
3. Kollisionsvermeidung durch Anpassung der Geschwindigkeitsprofile mit möglichen Kollisions-Kandidaten. Dieser Schritt erfolgt bevorzugt noch bevor das Fahrzeug losgefahren ist bzw. die aktuelle Trajektorie beginnt.

Im ersten Schritt, der Trajektorienkandidatenbestimmung, werden beispielsweise für jede verwendete Quelle/Senke-Kombination mehrere Pfad-Kandidaten 38_{m,n} berechnet, die eine möglichst geringe Krümmung aufweisen, damit möglichst hohe Beschleunigungen und damit verbundene Geschwindigkeiten erreicht werden können. Beispielsweise, um auf einer gekrümmten Bahn in der Spur zu bleiben, muss der Zentrifugalkraft entgegengewirkt werden. Das heißt, das Fahrzeug verwendet einen Teil seiner maximal möglichen Beschleunigung, nur um in der Spur zu bleiben, und nicht, um entlang des Pfades zu beschleunigen. Für eine maximale Beschleunigung entlang des Pfades sind also alle Pfade mit einer möglichst geringen Krümmung wünschenswert oder bevorzugt. Bei der Generierung der Pfade kommen beispielsweise Splines zum Einsatz, bei denen jeweils die Kontrollpunkte an Start und Ende immer fest sind. Für die Kontrollpunkte zwischen Start und Ende wird abhängig von der Länge ein Intervall definiert, welches festlegt, wieweit die Kontrollpunkte der einzelnen Kandidaten voneinander entfernt sein sollen, beispielsweise durch den Abstand 44. So kann sichergestellt werden, dass notwendige Punkte an Auf- und Abgabestellen immer genau durchfahren werden und auf der Freifläche der freie Raum gleichmäßig oder nach anderen Vorgaben genutzt wird, wie es beispielsweise in Fig. 2 dargestellt ist.

Für jeden Kandidaten kann ein zeitoptimales Geschwindigkeitsprofil berechnet werden. Dabei werden die Abschnitte der Bahnkurve äquidistant aufgeteilt und für jeden Abschnitt die Krümmung und daraus folgende Maximalgeschwindigkeit berechnet, siehe Fig. 3a. Anschließend werden die Abschnitte von Anfang bis Ende durchiteriert und die maximale Geschwindigkeit auf Basis der Beschleunigung berechnet, siehe Fig. 3b. Danach werden die Abschnitte rückwärts durchlaufen, so dass die maximal erreichbare Geschwindigkeit auch die Bremsmanöver berücksichtigt, siehe Fig. 3c.

Ferner erfolgt eine Zuweisung der Transportaufträge an die Fahrzeuge. Hierdurch wird festgelegt, welches Fahrzeug von wo nach wo zu fahren hat. Jedes Fahrzeug prüft dabei alle vorhandenen oder zur Auswahl bestimmten Kandidaten für seinen Fahrtauftrag.

Im zweiten Schritt werden die Transportaufträge den vorhandenen Fahrzeugen zugeteilt, wodurch festgelegt wird, welche Fahrt-Kandidaten für das Fahrzeug infrage kommen. Es ist anzumerken, dass von allen Transportaufträgen und damit verbundenen Trajektorien ein Teil immer fest, also unveränderlich ist, während ein anderer Teil sich in Planung befindet. Das heißt beispielsweise, dass die Trajektorien, welche entweder gerade von einem Fahrzeug befahren werden oder in Kürze starten, ein festgesetztes Geschwindigkeitsprofil aufweisen, welches nicht mehr von der Kollisionsvermeidung (siehe Punkt 3), der anderen Teilnehmer verändert werden kann. Dies resultiert zum einen aus den langen Bremswegen, aber auch aus der Kommunikations- und Verarbeitungszeit für das Berechnen der optimalen Profile. Im aktuellen Schritt werden diese Fahrzeuge als statische Hindernisse gesehen und bei der Auswahl eines Pfad-Kandidaten berücksichtigt. Für den aktuellen Auftrag wird ein Pfad gewählt, welcher möglichst wenig Hindernisse enthält.

Im dritten Schritt, der nach dem zweiten Schritt ausgeführt wird, werden die Geschwindigkeitsprofile für die Pfade bestimmt, wobei zunächst jedes Fahrzeug mit einem zeitoptimalen Profil beginnt. Da die Pfade im Schritt 1 als zeitoptimale Trajektorien geplant wurden, ist es immer möglich, diese mit der maximal möglichen Geschwindigkeit zu durchfahren, ohne vom Pfad abzuweichen. Die Kollisionsvermeidung macht die Fahrzeuge also in dieser Ausführungsform lediglich langsamer und nicht schneller. Dadurch ist sichergestellt, dass die Pfade immer exakt durchfahren werden können, da mit einer geringeren Geschwindigkeit auch die Zentrifugalkräfte geringer ausfallen, welche die Beschleunigung beeinflussen. Es werden zunächst alle Kollisionen bestimmt, welche bei den aktuellen Geschwindigkeitsprofilen auftreten können. Da durch Schritt 1 im Vorfeld alle Strecken bekannt sind, ist für jedes Fahrzeug bekannt, mit welchen Fahrzeugen es überhaupt theoretisch kollidieren könnte. Dies sorgt für eine enorme Einsparung an Rechenzeit, da die zu betrachtenden Szenarien hierauf eingeschränkt werden können. Die Kollisionen werden vermieden, indem ein Fahrzeug intelligent sein Geschwindigkeitsprofil anpasst.

Zur Anpassung des Geschwindigkeitsprofils liefern Ausführungsbeispiele verschiedene Strategien:
a) Die Verwendung einer festgelegten Priorisierung, beispielsweise als Round-Robin-Scheduling. Dies ist eine einfache und schnelle Variante. Hierbei wird für den Fall einer Kollision im Vorfeld festgelegt, welches Fahrzeug seine Geschwindigkeit anpassen wird. Dies kann entweder durch eine feste Rangordnung (etwa Fahrzeug A hat immer Vorfahrt vor Fahrzeug B), durch die willkürliche Reihenfolge, in der die Kollisionen geprüft werden (Kollision des Fahrzeugs B mit dem Fahrzeug A wurde geprüft, bevor die Kollision des Fahrzeugs A mit dem Fahrzeug B geprüft wurde, weshalb beispielsweise das Fahrzeug B Vorfahrt erhält), durch den Zeitstempel des Transportauftrags, so dass beispielsweise das früher startende Fahrzeug A Vorfahrt gegenüber dem später startenden Fahrzeug B erhält, durch die Priorität des Auftrags (Fahrzeug A muss vor Fahrzeug B ankommen, deshalb hat das Fahrzeug A Vorfahrt) oder durch ein beliebiges Auswahlverfahren festgelegt werden. Relevant ist an dieser Stelle lediglich, dass beide Fahrzeuge sämtliche Informationen aufweisen, um die Reihenfolge zu kennen, zu erkennen oder übereinstimmend zu bestimmen. Dieses Konzept hat den Vorteil, dass nur eines der beiden Fahrzeuge sein Geschwindigkeitsprofil anpassen und erneut auf Kollisionen mit anderen Fahrzeugen zu prüfen hat, wodurch schnell eine Lösung gefunden wird. Nachteilig ist möglicherweise, dass die gefundene Lösung womöglich nicht optimal im Sinne für das gesamte Sortiersystem ist, etwa indem das Fahrzeug A immer Vorfahrt vor dem Fahrzeug B erhält, aber beide schneller wären, wenn das Fahrzeug A auf das Fahrzeug B warten würde.
b) Exhaustive Search, Exhaustionsmethode: Bei dieser Variante werden mehrere Möglichkeiten der Konfliktvermeidung oder Kollisionsvermeidung durchgespielt. Kollidiert beispielsweise das Fahrzeug A mit dem Fahrzeug B, so werden beide Ausweichmöglichkeiten (Fahrzeug A bremst für Fahrzeug B oder Fahrzeug B bremst für Fahrzeug A) simuliert. Hierbei entstehen möglicherweise neue Kollisionen mit anderen Kandidaten, welche sich gerade in der Planung befinden. Alle diese Möglichkeiten werden in einer Baumstruktur sortiert. Die Blätter des Baums stellen kollisionsfreie Trajektorien für alle beteiligten Fahrzeuge dar. Hierdurch wird für die Kollisionsvermeidung eine wirklich optimale Lösung für alle Teilnehmer bestimmt. Dieses Verfahren geschieht allerdings auf Kosten der Ausführungszeit, da der zu durchsuchende Baum womöglich sehr groß und komplex ist.
c) Eine Kombination hieraus: hierbei wird versucht, das Beste aus beiden der Methoden A und B zusammenzufügen. Bei möglichen Kollisionen wird wieder der Möglichkeitsbaum aufgebaut, allerdings nur bis zu einer gewissen Tiefe, d. h., die Suche enthält ein Zeitlimit. Wenn nicht schnell genug eine optimale Lösung gefunden werden kann, greift das System auf die vordefinierte Reihenfolge gemäß Option a) zurück.

Die Planungsphase ist beispielsweise beendet, sobald für die Kandidaten eine optimale oder suboptimale Lösung gefunden wurde. Ab diesem Zeitpunkt wird die Trajektorie festgesetzt, d. h., nachfolgende Planungen der Fahrzeuge können diese bspw. nicht mehr beeinflussen oder lediglich bei Erreichen vorbestimmter Prioritäten oder sonstiger vordefinierter Ausnahmesituationen.

Die Schritte 2 und 3, die Zuteilung der Transportaufträge und das Anpassen der Geschwindigkeitsprofile, werden für jedes Fahrzeug immer wieder neu hintereinander ausgeführt. Sobald die Situation im Lager ein neues Streckennetz erfordert, beginnt der Prozess wieder mit der Bestimmung der Trajektorien im Schritt 1.

Eine besondere Einsatzmöglichkeit von holonomischen Fahrzeugen ist, dass mehrere einzelne Fahrzeuge eine Formation bilden können, welche sich verhält wie ein einzelnes, größeres Fahrzeug. Solche Formationsfahrten können ebenfalls von der oben beschriebenen Lösung realisiert werden. Hierfür wird im ersten Schritt zunächst eine Trajektorie für die gesamte Formation erstellt, aus welcher über den bekannten Offset jedes Fahrzeugs vom Formationsmittelpunkt, die Trajektorien der einzelnen Fahrzeuge gebildet werden. Die Schritte 2 und 3, d. h., die Fahrtauftragzuweisung und die Geschwindigkeitsanpassung, können analog wie bei allen anderen Teilnehmern ausgeführt werden, mit der Einschränkung oder zusätzlichen Randbedingung, dass die Geschwindigkeitsprofile aller Formationsfahrzeuge immer gemeinsam angepasst werden und die Trajektorien gleichzeitig starten.

Durch die hierin beschriebene Ausführungsbeispiele können die spezifischen technischen Vorteile der holonomischen Fahrzeuge so ausgenutzt werden, dass hohe Beschleunigungen und Geschwindigkeiten durch die kinodynamische Wegplanung gefahren werden können. Im Gegensatz zu bekannten Verfahren kann auf reaktives Ausweichen und große Sicherheitsabstände verzichtet werden und damit eine große Anzahl von Fahrzeugen gleichzeitig Transportaufträge durchführen.

Ausführungsbeispiele lassen sich insbesondere einsetzen bei der Realisierung von Sortieranlagen oder Sortiersystemen mit autonom fahrenden Transportfahrzeugen.

Ausführungsbeispiele sehen auch Verfahren zum Betreiben eines Sortiersystems und zum Betreiben einer Sortiersystemsteuerungseinrichtung vor.

Ein Verfahren zum Betreiben eines Sortiersystems, um eine Mehrzahl von Fahrzeugen in dem Sortiersystem entlang von Trajektorien zu bewegen, umfasst dabei ein Berechnen einer Anzahl von Trajektorien zwischen einer ersten Anzahl von Startpunkten und einer zweiten Anzahl von Endpunkten, so dass jeder Trajektorie eine Geschwindigkeitsvorgabe für ein Fahrzeug entlang der Trajektorie zugeordnet ist. Ferner erfolgt ein Übermitteln von Fahrtaufträgen an die Mehrzahl von Fahrzeugen, so dass jeder Fahrtauftrag eine Fahrt von einem der Startpunkt zu einem der Endpunkte entlang einer der Trajektorien umfasst. Ferner erfolgt ein Untersuchen einer Trajektorie für einen neuen Fahrtauftrag auf mögliche Kollisionen mit einem weiteren Fahrzeug des Sortiersystems, um eine Kollisionsinformation zu erhalten, die eine mögliche Kollision anzeigt. Das Verfahren umfasst ein Verändern der der Trajektorie zugeordneten Geschwindigkeitsvorgabe basierend auf der Kollisionsinformation, um eine veränderte Geschwindigkeitsvorgabe zu erhalten, und um die mögliche Kollision zu vermeiden. Ferner erfolgt ein Übermitteln des neuen Fahrtauftrags umfassend eine Instruktion, die die Trajektorie und die veränderte Geschwindigkeitsvorgabe umfasst, an ein Fahrzeug.

Ein Verfahren zum Betreiben einer Sortiersystemsteuerungseinrichtung umfasst ein Übermitteln von Fahrtaufträgen an eine Mehrzahl von Fahrzeugen, so dass jeder Fahrtauftrag eine Fahrt von einem Startpunkt zu einem Endpunkt entlang einer jeweiligen Trajektorie umfasst, so dass jeder Trajektorie eine Geschwindigkeitsvorgabe für ein Fahrzeug entlang der Trajektorie zugeordnet ist. Das Verfahren umfasst ein Untersuchen, für einen neuen Fahrtauftrag, einer zugehörigen Trajektorie auf mögliche Kollisionen mit einem Fahrtauftrag, um eine Kollisionsinformation zu erhalten, die eine mögliche Kollision anzeigt. Ferner erfolgt ein Verändern der der Trajektorie zugeordneten Geschwindigkeitsvorgabe basierend auf der Kollisionsinformation, um eine veränderte Geschwindigkeitsvorgabe zu erhalten, und um die mögliche Kollision zu vermeiden. Es erfolgt eine Ausgeben des neuen Fahrtauftrags umfassend eine Instruktion, die die Trajektorie und die veränderte Geschwindigkeitsvorgabe umfasst.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Sortiersystemsteuerungseinrichtung mit:
einer Koordinierungseinrichtung (28), die ausgebildet ist, um Fahrtaufträge an eine Mehrzahl von Fahrzeugen (12) zu übermitteln, wobei jeder Fahrtauftrag eine Fahrt von einem Startpunkt zu einem Endpunkt entlang einer jeweiligen Trajektorie (14) umfasst; wobei jeder Trajektorie (14) eine Geschwindigkeitsvorgabe (22) für ein Fahrzeug (12) entlang der Trajektorie (14) zugeordnet ist;
einer Kollisionsvermeidungseinrichtung (32), die ausgebildet ist, um für einen neuen Fahrtauftrag eine zugehörige Trajektorie (14) auf mögliche Kollisionen mit einem Fahrtauftrag zu untersuchen, um eine Kollisionsinformation zu erhalten, die eine mögliche Kollision anzeigt; und die der Trajektorie (14) zugeordnete Geschwindigkeitsvorgabe (22) basierend auf der Kollisionsinformation zu verändern, um eine veränderte Geschwindigkeitsvorgabe (22') zu erhalten; und um die mögliche Kollision zu vermeiden;
einer Schnittstelle zum Ausgeben des neuen Fahrtauftrags umfassend eine Instruktion, die die Trajektorie (14) und die veränderte Geschwindigkeitsvorgabe (22') umfasst;
wobei die der Trajektorie zugeordnete Geschwindigkeitsvorgabe eine auf einer Vorabbestimmung basierende Geschwindigkeitsvorgabe ist und ein Geschwindigkeitsprofil für eine Geschwindigkeit (v) über einen Weg (x) der Trajektorie (14) umfasst; und die Kollisionsvermeidungseinrichtung (32) ausgebildet ist, um die Geschwindigkeitsvorgabe nachträglich und vor der Übermittlung des Fahrtauftrages durch die veränderte Geschwindigkeitsvorgabe (22') anzupassen , um die mögliche Kollision zu vermeiden.

2. Sortiersystemsteuerungseinrichtung gemäß Anspruch 1, bei der die Koordinierungseinrichtung (28) ausgebildet ist, um für den neuen Fahrtauftrag die Trajektorie (14) aus einer Mehrzahl von Trajektorienkandidaten (38) auszuwählen; wobei die Mehrzahl von Trajektorienkandidaten (38) bereits an Fahrzeugen (12) zugewiesene Trajektorien (14) in bestehenden Fahrtaufträgen berücksichtigt.

3. Sortiersystemsteuerungseinrichtung gemäß Anspruch 1 oder 2, bei der die Kollisionsvermeidungseinrichtung (32) ausgebildet ist, um die Geschwindigkeitsvorgabe (22) für bereits zugewiesene Trajektorien (14) bestehender Fahrtaufträge nicht anzupassen.

4. Sortiersystemsteuerungseinrichtung gemäß Anspruch 2 oder 3, bei der die Koordinierungseinrichtung (28) ausgebildet ist, um Fahrzeuge (12) auf bereits zugewiesenen Trajektorien (14) für die Auswahl der Trajektorie (14) als potentielle Hindernisse zu berücksichtigen.

5. Sortiersystemsteuerungseinrichtung gemäß einem der vorangehenden Ansprüche, bei der die Kollisionsvermeidungseinrichtung (32) ausgebildet ist, um für eine Mehrzahl von neuen Fahrtaufträgen eine Mehrzahl von korrespondierenden Trajektorien (14) als jeweils zeitoptimale Geschwindigkeitsvorgabe (22) für das Durchqueren der Trajektorie (14) zu erhalten, und um für die Mehrzahl der neuen Trajektorien (14) mögliche Kollisionen der Fahrzeuge (12) untereinander zu bestimmen, und um die möglichen Kollisionen innerhalb der neuen Fahrtaufträge zu vermeiden, indem zumindest eine der Geschwindigkeitsvorgaben (22) angepasst wird.

6. Sortiersystemsteuerungseinrichtung gemäß Anspruch 5, bei der vermittels veränderter Geschwindigkeitsvorgaben global für die Mehrzahl von Fahrzeugen (12) insgesamt zeitoptimierte kollisionsfreie Fahrtaufträge erhalten werden.

7. Sortiersystemsteuerungseinrichtung gemäß einem der vorangehenden Ansprüche, bei der die Kollisionsvermeidungseinrichtung (32) ausgebildet ist, um mögliche Kollisionen für eine Mehrzahl von neuen Fahrtaufträgen zu bestimmen, und um die Geschwindigkeitsvorgaben der den Fahrtaufträgen von der Koordinierungseinrichtung (28) zugeordneten Geschwindigkeitsprofile aufeinander abzustimmen; wobei bereits übermittelte Geschwindigkeitsprofile unverändert bleiben.

8. Sortiersystemsteuerungseinrichtung gemäß einem der vorangehenden Ansprüche, bei der die Kollisionsvermeidungseinrichtung (32) ausgebildet ist, um bereits veränderte Geschwindigkeitsvorgaben (22'), als unveränderlich zu behandeln, bis der Fahrtauftrag auf der zugewiesenen Trajektorie (14) beendet ist.

9. Sortiersystemsteuerungseinrichtung gemäß einem der vorangehenden Ansprüche, die Folgendes aufweist:
eine Berechnungseinrichtung (24), die ausgebildet ist, um zwischen einer ersten Anzahl von Startpunkten und einer zweiten Anzahl von Endpunkten eine dritte Anzahl von Trajektorien (14) zu bestimmen, wobei die Koordinierungseinrichtung (28) ausgebildet ist, um Fahrtaufträge an die Trajektorien (14) zuzuweisen.

10. Sortiersystemsteuerungseinrichtung gemäß Anspruch 9, bei der die Berechnungseinrichtung (24) ausgebildet ist, um zwischen einem Startpunkt der ersten Anzahl von Startpunkten und einem Endpunkt der zweiten Anzahl von Endpunkten eine Mehrzahl von Trajektorienkandidaten (38) zu berechnen;
wobei die Koordinierungseinrichtung (28) ausgebildet ist, um einen der Trajektorienkandidaten (38) als Trajektorie (14) für den neuen Fahrtauftrag auszuwählen.

11. Sortiersystemsteuerungseinrichtung gemäß einem der vorangehenden Ansprüche, bei dem die Trajektorie (14) einen kontinuierlichen Weg oder eine kontinuierliche Route zwischen einem Startpunkt und einem Endpunkt beschreibt.

12. Sortiersystemsteuerungseinrichtung gemäß einem der vorangehenden Ansprüche, bei der die Trajektorie (14) eine Anzahl von Trajektorienabschnitten umfasst, wobei die Berechnungseinrichtung (24) ausgebildet ist, um für jeden Trajektorienabschnitt eine Abschnittsgeschwindigkeitsvorgabe zu berechnen; und um die Geschwindigkeitsvorgabe (22) basierend auf einer Kombination der Abschnittsgeschwindigkeitsvorgaben zu berechnen.

13. Sortiersystemsteuerungseinrichtung gemäß Anspruch 12, bei der die Berechnungseinrichtung (24) ausgebildet ist, um für jeden Trajektorienabschnitt basierend auf einer Krümmung des Trajektorienabschnitts und einer maximalen Beschleunigung eines Fahrzeugs (12) eine Maximalgeschwindigkeit zu berechnen; und um basierend auf der Maximalgeschwindigkeit, einer Geschwindigkeitsvorgabe (22) zum Beginn des Trajektorienabschnitts und einer Geschwindigkeitsvorgabe (22) an einem Ende des Trajektorienabschnitts die Abschnittsgeschwindigkeitsvorgabe zu berechnen.

14. Verfahren zum Betrieben einer Sortiersystemsteuerungseinrichtung mit folgenden Schritten:
Übermitteln von Fahrtaufträgen an eine Mehrzahl von Fahrzeugen (12), so dass jeder Fahrtauftrag eine Fahrt von einem Startpunkt zu einem Endpunkt entlang einer jeweiligen Trajektorie (14) umfasst; so dass jeder Trajektorie (14) eine Geschwindigkeitsvorgabe (22) für ein Fahrzeug (12) entlang der Trajektorie (14) zugeordnet ist;
Untersuchen, für einen neuen Fahrtauftrag, einer zugehörigen Trajektorie (14) auf mögliche Kollisionen mit einem Fahrtauftrag, um eine Kollisionsinformation zu erhalten, die eine mögliche Kollision anzeigt; und Verändern der der Trajektorie (14) zugeordneten Geschwindigkeitsvorgabe (22) basierend auf der Kollisionsinformation, um eine veränderte Geschwindigkeitsvorgabe (22') zu erhalten; und um die mögliche Kollision zu vermeiden;
Ausgeben des neuen Fahrtauftrags umfassend eine Instruktion, die die Trajektorie (14) und die veränderte Geschwindigkeitsvorgabe (22') umfasst;
so dass die der Trajektorie zugeordnete Geschwindigkeitsvorgabe eine auf einer Vorabbestimmung basierende Geschwindigkeitsvorgabe ist und ein Geschwindigkeitsprofil für eine Geschwindigkeit (v) über einen Weg (x) der Trajektorie (14) umfasst; und die Kollisionsvermeidungseinrichtung (32) ausgebildet ist, um die Geschwindigkeitsvorgabe nachträglich und vor der Übermittlung des Fahrtauftrages durch die veränderte Geschwindigkeitsvorgabe (22') anzupassen , um die mögliche Kollision zu vermeiden.

15. Computerprogramm mit einem Programmcode zur Durchführung des Verfahrens nach Anspruch 14, wenn das Programm auf einem Computer läuft.

## Claims

1. A sorting system control means comprising:
coordinating means (28) configured to transmit drive requests to a plurality of vehicles (12), wherein each drive request includes a drive from a start point to an end point along a respective trajectory (14); wherein a speed specification (22) for a vehicle (12) along the trajectory (14) is allocated to each trajectory (14);
collision avoidance means (32) configured to examine, for a new drive request, an allocated trajectory (14) for possible collisions with a drive request to obtain collision information indicating a possible collision; and to amend the speed specification (22) allocated to the trajectory (14) based on collision information to obtain an amended speed specification (22'); and to prevent the possible collision;
an interface for outputting the new drive request including an instruction that includes the trajectory (14) and the amended speed specification (22').
wherein the speed specification associated with the trajectory is a speed specification based on a predetermination and includes a speed profile for a speed (v) across a path (x) of the trajectory (14); and the collision avoidance means (32) is configured to adapt the speed specification subsequently and prior to transmission of the drive request by the amended speed specification (22') to avoid the possible collision.

2. The sorting system control means according to claim 1, wherein the coordinating means (24) is configured to select, for the new drive request, the trajectory (14) from a plurality of trajectory candidates (38); wherein the plurality of trajectory candidates (38) considers trajectories (14) already allocated to vehicles (12) in existing drive requests.

3. The sorting system control means according to claim 1 or 2, wherein the collision avoidance means (32) is configured to not adapt the speed specification (22) for already allocated trajectories (14) of existing drive requests.

4. The sorting system control means according to claim 2 or 3, wherein the coordinating means (28) is configured to consider vehicles (12) on already allocated trajectories (14) for the selection of the trajectory (14) as potential obstacles.

5. The sorting system control means according to any of the preceding claims, wherein the collision avoidance means (32) is configured to obtain, for a plurality of new drive requests, a plurality of corresponding trajectories (14) as respective time-optimum speed specification (22) for traversing the trajectory (14) and to determine, for the plurality of the new trajectories (14), possible collisions among the vehicles (12) and to prevent the possible collisions within the new drive requests by adapting at least one of the speed specifications (22).

6. The sorting system control means according to claim 5, wherein, by means of amended speed specifications, overall time-optimized collision-free drive requests are obtained globally for the plurality of vehicles (12).

7. The sorting system control means according to any of the preceding claims, wherein the collision avoidance means (32) is configured to determine possible collisions for a plurality of new drive requests and to match the speed specifications of the speed profiles allocated to the drive requests by the coordinating means (28); wherein already transmitted speed profiles remain unamended.

8. The sorting system control means according to any of the preceding claims, wherein the collision avoidance means (32) is configured to treat already amended speed specifications (22') as unamendable until the drive request on the allocated trajectory (14) is terminated.

9. The sorting system control means according to any of the preceding claims, comprising:
calculating means (24) configured to determine a third number of trajectories (14) between a first number of start points and a second number of end points, wherein the coordinating means (28) is configured to allocate drive requests to the trajectories (14).

10. The sorting system control means according to claim 9, wherein the calculating means (24) is configured to calculate a plurality of trajectory candidates (38) between a start point of the first number of start points and an end point of the second number of end points;
wherein the coordinating means (28) is configured to select one of the trajectory candidates (38) as trajectory (14) for the new drive request.

11. The sorting system control means according to any of the preceding claims, wherein the trajectory (14) describes a continuous path or a continuous route between a start point and an end point.

12. The sorting system control means according to any of the preceding claims, wherein the trajectory (14) includes a plurality of trajectory portions, wherein the calculating means (24) is configured to calculate a portion speed specification for each trajectory portion; and to calculate the speed specification (22) based on a combination of the portion speed specifications.

13. The sorting system control means according to claim 12, wherein the calculating means (24) is configured to calculate a maximum speed for each trajectory portion based on a curvature of the trajectory portion and a maximum acceleration of a vehicle (12); and to calculate the portion speed specification (22) based on the maximum speed, a speed specification (22) at the start of the trajectory portion and a speed specification (22) at an end of the trajectory portion.

14. A method for operating a sorting system control means, comprising:
transmitting drive requests to a plurality of vehicles (12) such that each drive request includes a drive from a start point to an end point along a respective trajectory (14); such that a speed specification (22) for a vehicle (12) along the trajectory (14) is allocated to each trajectory (14);
examining, for a new drive request, an allocated trajectory (14) for possible collisions with a drive request to obtain collision information indicating a possible collision; and amending the speed specification (22) allocated to the trajectory (14) based on the collision information to obtain an amended speed specification (22'); and to prevent the possible collision;
outputting the new drive request including an instruction that includes the trajectory (14) and the amended speed specification (22');
such that the speed specification associated with the trajectory is a speed specification based on a predetermination and includes a speed profile for a speed (v) across a path (x) of the trajectory (14); and the collision avoidance means (32) is configured to adapt the speed specification subsequently and prior to transmission of the drive request by the amended speed specification (22') to avoid the possible collision.

15. A computer program having program code for performing the method according to claim 26 when the program runs on a computer.

## Revendications

1. Dispositif de commande de système de triage avec :
un moyen de coordination (28) qui est conçu pour transmettre des ordres de déplacement à une pluralité de véhicules (12), dans lequel chaque ordre de déplacement comprend un trajet depuis un point de départ jusqu'à un point d'arrivée le long d'une trajectoire respective (14) ; dans lequel est associée à chaque trajectoire (14) une spécification de vitesse (22) pour un véhicule (12) le long de la trajectoire (14) ;
un dispositif anticollision (32) qui est conçu pour examiner des collisions potentielles avec un ordre de déplacement par rapport à une trajectoire correspondante (14) pour un nouvel ordre de déplacement afin d'obtenir des informations de collision qui indiquent une collision potentielle ; et pour modifier la spécification de vitesse (22) associée à la trajectoire (14) sur la base des informations de collision afin d'obtenir une spécification de vitesse (22') modifiée ; et pour éviter toute collision potentielle ;
une interface pour donner le nouvel ordre de déplacement comprenant une instruction qui comprend la trajectoire (14) et la spécification de vitesse (22') modifiée ;
dans lequel la spécification de vitesse associée à la trajectoire est une spécification de vitesse basée sur une détermination préalable et comprend un profil de vitesse pour une vitesse (v) sur un trajet (x) de la trajectoire (14) ; et le dispositif anticollision (32) est conçu pour adapter la spécification de vitesse ultérieurement et avant la transmission de l'ordre de déplacement par l'intermédiaire de la spécification de vitesse (22') modifiée afin d'éviter la collision potentielle.

2. Dispositif de commande de système de triage selon la revendication 1, dans lequel le moyen de coordination (28) est conçu pour sélectionner la trajectoire (14) pour le nouvel ordre de déplacement à partir d'une pluralité de candidats de trajectoire (38) ; dans lequel la pluralité de candidats de trajectoire (38) prend en considération les trajectoires (14) déjà attribuées à des véhicules (12) dans des ordres de déplacement existants.

3. Dispositif de commande de système de triage selon la revendication 1 ou 2, dans lequel le dispositif anticollision (32) est conçu pour ne pas adapter la spécification de vitesse (22) à des trajectoires déjà attribuées (14) d'ordres de déplacement existants.

4. Dispositif de commande de système de triage selon la revendication 2 ou 3, dans lequel le moyen de coordination (28) est conçu pour prendre en considération des véhicules (12) sur des trajectoires déjà attribuées (14) en tant qu'obstacles potentiels pour la sélection de la trajectoire (14).

5. Dispositif de commande de système de triage selon une des revendications précédentes, dans lequel le dispositif anticollision (32) est conçu pour obtenir, pour une pluralité de nouveaux ordres de déplacement, une pluralité de trajectoires correspondantes (14) sous la forme d'une spécification de vitesse (22) respectivement optimale en temps pour la traversée de la trajectoire (14), et pour déterminer des collisions potentielles des véhicules (12) entre eux pour la pluralité de nouvelles trajectoires (14), et pour éviter les collisions potentielles à l'intérieur des nouveaux ordres de déplacement en adaptant au moins une des spécifications de vitesse (22).

6. Dispositif de commande de système de triage selon la revendication 5, dans lequel à l'aide des spécifications de vitesse modifiées on obtient un ensemble d'ordres de déplacement sans collision et optimisés dans le temps de manière globale pour la pluralité de véhicules (12).

7. Dispositif de commande de système de triage selon une des revendications précédentes, dans lequel le dispositif anticollision (32) est conçu pour déterminer les collisions potentielles pour une pluralité de nouveaux ordres de déplacement et pour coordonner entre eux les spécifications de vitesse des profils de vitesse associés aux ordres de déplacement par le moyen de coordination (28) ; dans lequel les profils de vitesse déjà transmis restent inchangés.

8. Dispositif de commande de système de triage selon une des revendications précédentes, dans lequel le dispositif anticollision (32) est conçu pour traiter comme inchangeables les spécifications de vitesse (22') déjà modifiées, jusqu'à ce que l'ordre de déplacement sur la trajectoire attribuée (14) soit terminé.

9. Dispositif de commande de système de triage selon une des revendications précédentes, qui présente les éléments suivants :
un moyen de calcul (24) qui est conçu pour calculer un troisième nombre de trajectoires (14) entre un premier nombre de points de départ et un deuxième nombre de points d'arrivée, dans lequel le moyen de coordination (28) est conçu pour attribuer des ordres de déplacement aux trajectoires (14).

10. Dispositif de commande de système de triage selon la revendication 9, dans lequel le moyen de calcul (24) est conçu pour calculer une pluralité de candidats de trajectoire (38) entre un point de départ du premier nombre de points de départ et un point d'arrivée du deuxième nombre de points d'arrivée ;
dans lequel le moyen de coordination (28) est conçu pour sélectionner un des candidats de trajectoire (38) en tant que trajectoire (14) pour le nouvel ordre de déplacement.

11. Dispositif de commande de système de triage selon une des revendications précédentes, dans lequel la trajectoire (14) décrit un trajet continu ou une route continue entre un point de départ et un point d'arrivée.

12. Dispositif de commande de système de triage selon une des revendications précédentes, dans lequel la trajectoire (14) comprend un nombre de sections de trajectoire, dans lequel le moyen de calcul (24) est conçu pour calculer pour chaque section de trajectoire une spécification de vitesse de section ; et pour calculer la spécification de vitesse (22) sur la base d'une combinaison des spécifications de vitesse de section.

13. Dispositif de commande de système de triage selon la revendication 12, dans lequel le moyen de calcul (24) est conçu pour calculer une vitesse maximale pour chaque section de trajectoire sur la base d'un virage de la section de trajectoire et d'une accélération maximale d'un véhicule (12) ; et pour calculer la spécification de vitesse de section sur la base de la vitesse maximale d'une spécification de vitesse (22) au début de la section de trajectoire et d'une spécification de vitesse (22) à la fin d'une section de trajectoire.

14. Procédé destiné à faire fonctionner un dispositif de commande de système de triage avec les étapes suivantes :
transmettre des ordres de déplacement à une pluralité de véhicules (12) de telle sorte que chaque ordre de déplacement comprenne un trajet depuis un point de départ jusqu'à un point d'arrivée le long d'une trajectoire respective (14) ; de telle sorte qu'est associée à chaque trajectoire (14) une spécification de vitesse (22) pour un véhicule (12) le long de la trajectoire (14) ;
examiner, pour un nouvel ordre de déplacement, des collisions potentielles avec un ordre de déplacement par rapport à une trajectoire correspondante (14) afin d'obtenir des informations de collision qui indiquent une collision potentielle ; et modifier la spécification de vitesse (22) associée à la trajectoire (14) sur la base des informations de collision afin d'obtenir une spécification de vitesse (22') modifiée ; et pour éviter toute collision potentielle ;
donner le nouvel ordre de déplacement comprenant une instruction qui comprend la trajectoire (14) et la spécification de vitesse (22') modifiée ;
de telle sorte que la spécification de vitesse associée à la trajectoire soit une spécification de vitesse basée sur une détermination préalable et comprenne un profil de vitesse pour une vitesse (v) sur un trajet (x) de la trajectoire (14) ; et le dispositif anticollision (32) est conçu pour adapter la spécification de vitesse ultérieurement et avant la transmission de l'ordre de déplacement par l'intermédiaire de la spécification de vitesse (22') modifiée pour éviter la collision potentielle.

15. Programme d'ordinateur avec un code de programme pour réaliser le procédé selon la revendication 14, lorsque le programme est exécuté sur un ordinateur.
